# EUROPEAN PATENT SPECIFICATION

(11) **EP 3 160 636 B1**
(45) Date of publication and mention of the grant of the patent: **14.04.2021**
(21) Application number: 15745281.4
(22) Date of filing: 23.06.2015
(51) Int. Cl.: B01J 19/00

(54) **MULTIPLE IDENTIFICATION POINT AUTOMATED PARAMETER ASSURANCE METHOD**
AUTOMATISIERTES PARAMETERVERSICHERUNGSVERFAHREN MIT MEHREREN IDENTIFIZIERUNGSPUNKTEN
PROCÉDÉ D'ASSURANCE DE PARAMÈTRES AUTOMATISÉ AUX POINTS D'IDENTIFICATION MULTIPLES

(30) Priority: 24.06.2014 US 201462016476 P
(43) Date of publication of application: 03.05.2017
(73) Proprietor: Parker-Hannifin Corporation, Cleveland, OH 44124 (US)
(72) Inventor: PIGHIN, Dean James, Newbury Park, CA 91320 (US); BERGS, Richard Kermit, Prince Frederick, MD 20678 (US); BEERS, Donald Robert, Camarillo, CA 93012 (US); D'ANTONIO, Peter Anthony Jr., Marlton, NJ 08053 (US)
(74) Representative: Duxbury, Stephen
(86) International application number: PCT/US2015/037103
(87) International publication number: WO 2015/200269

(56) References cited:
- WO-A2-2013/049608
- US-A1- 2008 233 653
- US-A1- 2011 097 245
- US-A1- 2013 020 727
- US-A1- 2014 011 295
- US-A1- 2014 170 758

## Description

### Cross Reference to Related Application

This application claims the benefit of U.S. Provisional Patent Application Serial No. 62/016,476, filed June 24, 2014,

### Field of the Disclosure

The present subject matter generally relates to systems such as manifold systems for biopharmaceutical fluids processing that incorporate consumables having at least one tolerance specification related to the system.

### Background

Biopharmaceutical manufacturing and clinical production facilities are known to employ single-use components or consumables that are provided in ready-to-use condition such as exhibiting adequate sterilization required for intended uses. Consumables also are employed in processing and purification of bioreactor solutions, including unit-operational platforms for aseptic purification and/or processing of solutions by normal flow filtration ("NFF"), tangential flow filtration ("TFF"), chromatography, preparative chromatography, bioreactor applications, and so forth.

Methods and systems in this regard have been known to include a combination of reusable or multi-use non-consumable components along with single-use, disposable or consumable components, often in the context of manifold systems and/or modular systems assembled or modified according to the intended use, such as NFF, TFF and so forth. Systems and methods of these types of manifolds, modular arrangements and single-use components are noted in U.S. Patents No. 6,712,963, No. 7,052,603, No. 7,410,587, No. 6,350,382, No. 6,607,669, No. 7,857,506, No. 7,788,047, No. 7,927,010, No. 8,506,162, and No. 8,817,259, and U.S. Published Patent Applications No. 2006/0118472, No. 2013/0131245, No. 2014/0060161 and No. 2014/0353516. Methods and systems of this general type include disposable or consumable components such as tubing, valves, connectors, pinch valves, sensors, bags, bioreactor bags, flow-through analysis tubes, containers, and collection bags US2013/020727 discloses an apparatus suitable for processing fluids by using consumables and non-consumables.

### Summary

The present disclosure concerns systems and methods having automated parameter assurance features, typically exhibiting multiple identification point features. Such parameter assurance capabilities are particularly directed to components for these types of systems that are of the consumable, single-use or disposable types. Generally, operating logic interrogates for and detects compliance or lack of compliance with desired parameters. Typically, the operating logic detects operation inconsistent with the readable tolerance specification and indicates non-suitability for use in the system or method The invention concerns an apparatus according to claim 1 and a method according to claim 9. Embodiments of the invention are according to claims 2-8 and to claims 10-13.

One embodiment concerns manifold systems and methods for biopharmaceutical fluids processing, the system including consumables and non-consumables, each having a predetermined function, wherein the consumables and non-consumables combine into a system for biopharmaceutical fluids processing of a selected type or types. At least one consumable of the system has a specific consumable characteristic readable tolerance specification that defines suitability of the consumable for use in the manifold system, while the non-consumable includes operating logic that controls interrogation of the specific consumable with respect to its specific readable tolerance specification.

Another embodiment concerns systems and methods for biopharmaceutical fluids processing, the system including consumables and non-consumables, each having a predetermined function, wherein the consumables and non-consumables combine into a system and method for biopharmaceutical fluids processing of a selected type or types. At least one consumable of the system or method has a specific consumable characteristic readable tolerance specification that defines suitability of the consumable for use in the system or method, while the non-consumable includes operating logic that controls interrogation of the specific consumable with respect to its specific readable tolerance specification that is an operational detail, a parameter specification, or a combination thereof.

A further embodiment concerns systems or methods for biopharmaceutical fluids processing, the system including consumables and non-consumables, each having a predetermined function, wherein the consumables and non-consumables combine into a system or method for biopharmaceutical fluids processing of a selected type or types. At least one consumable has a specific consumable characteristic readable tolerance specification that defines suitability of the consumable for use in the system or method, while the non-consumable includes operating logic that controls interrogation of the specific consumable with respect to its specific readable tolerance specification embedded within the specific consumable.

One embodiment concerns manifold systems or methods for biopharmaceutical fluids processing, the system including consumables and non-consumables, each having a predetermined function, wherein the consumables and non-consumables combine into a system for biopharmaceutical fluids processing of a selected type or types. At least one consumable has a specific consumable characteristic readable tolerance specification that defines suitability of the consumable for use in the manifold system or method, while the non-consumable includes operating logic that controls interrogation of the specific consumable with respect to its specific readable tolerance specification. The specific consumable is recognized as non-genuine for use in that manifold system when the readable tolerance specification is interrogated and determined to be inconsistent with the readable tolerance specification for that consumable.

A further embodiment concerns manifold systems and methods for biopharmaceutical fluids processing, the system including consumables and non-consumables, each having a predetermined function, wherein the consumables and non-consumables combine into a system or method for biopharmaceutical fluids processing of a selected type or types. At least one consumable has a specific consumable characteristic readable tolerance specification that defines suitability of the consumable for use in the manifold system, while the non-consumable includes operating logic that controls interrogation of the specific consumable with respect to its specific readable tolerance specification. In this embodiment, the readable tolerance specification is embedded with the specific consumable and includes a multipoint storage device for the embedded specific consumable.

In an embodiment, a parameter assurance and lock-out method is provided. An operator physically loads a consumable on the system, which captures consumable information such as a bar code scan, RFID memory key, wireless collection, etc., and checking ensues for genuine product and data validation for that specific consumable. If validation passes, the functions dependent on the consumable type are enabled. Validation failure is recognized and, when desired, prevents continued use.

In an embodiment, a parameter assurance and lock-out system or method is provided. An operator physically loads a consumable on the system, which captures consumable information such as a bar code scan, RFID memory key, wireless collection, etc., and checking ensues for genuine product and data validation for that specific consumable. If validation passes, the functions dependent on the consumable type are enabled. Validation failure is recognized and, when desired, prevents continued use. With functions enabled, and with operating limits, batch information, document storage requirements and/or automation sequence based on consumables are set, processing proceeds.

### Brief Description of the Drawings

Fig. 1 is a perspective view of a fill and dispense system suitable for applicability with the present system and method;
Fig. 2 is a further perspective view of the system illustrated in Fig. 1;
Fig. 3 is a plan view of an embodiment of a filtration manifold assembly;
Fig. 4 is a perspective view showing a sterilized packaged component with a barcode being read by a reader of a system embodying the disclosure when the median is a barcode;
Fig. 5 is a schematic of a load filtration manifold display associated with a step-wise method with user prompts to load a static filtration manifold;
Fig. 6 is a schematic unload manifold display concerning a step-wise method with user prompts to load the static dispensing manifold, and at stack loading of the dispensed manifold, the pinch valves open to allow insertion of dispense tubing;
Fig. 7 is a schematic maintenance method display where operators have the ability to modify or delete stored methods in the system, allowing parameter field population with stored values for that method, allowing for parameter modification as needed;
Fig. 8 is a schematic illustration of a flush method display and launching a parameter table and storage method screen where operators are able to create and store flush methods for the manifold;
Fig. 9 is a schematic illustration of integrity test display for launching a parameter table and storage method screen where operators are able to create and store filter integrity test methods;
Fig. 10 is a schematic illustration of a display of an operation page as the launch page where operators have the ability to load recipes and execute them through, for example, a manual mode, a single method execution mode, and a batch method execution mode;
Fig. 11 is a schematic illustration of a run screen allowing a user to commence a method sequence;
Fig. 12 is a schematic illustration of a manual screen display as a template for operation of the system without a predetermined stored method;
Fig. 13 is a schematic illustration of a single method execution display to launch a page where operators have the ability to load a single automated filtration or dispensing system and practice its method, allowing for access to multiple dispense methods;
Fig. 14 is a schematic illustration of a batch recipe creation display;
Fig. 15 is a schematic illustration of a batch maintenance display;
Fig. 16 is a schematic illustration of a batch select display for batch method execution allowing operators to run a complete sequence of operations to complete a batch process;
Fig. 17 is a schematic illustration of an idle system state display;
Fig. 18 is a schematic illustration of an idle system state display for a sequence of operations as they are executed and includes operator prompting where inputs or confirmation are appropriate;
Fig. 19 is a schematic illustration of an alarms management display allowing modification of alarm parameters;
Fig. 20 is a schematic illustration of a constants display allowing entry or modification of programmed constants tied to software;
Fig. 21 is a schematic illustration of a trending display for graphical representation of specific parameters;
Fig. 22 is a perspective view of another fill and dispense system with a manifold that can be suitable for achieving NFF strategies;
Fig. 23 is a schematic illustration of a system with a manifold having consumables according to the present disclosure;
Fig. 24 is a schematic illustration of step 1 of the full process for a system generally as illustrated in Fig. 23, illustrating flush;
Fig. 25 is a schematic illustration of step 2 of the Fig. 21 system generally illustrated in Fig. 23, being an equilibrate step or procedure;
Fig. 26 is a schematic illustration of step 3 of the system generally illustrated in Fig. 23, being an air purge waste step or procedure;
Fig. 27 is a schematic illustration of step 4 of the system generally illustrated in Fig. 23, being a filtration step or procedure;
Fig. 28 is a schematic illustration of step 5 of the system generally illustrated in Fig. 23, being an air purge product step or procedure;
Fig. 29 is a schematic illustration of step 6 of the system generally illustrated in Fig. 23, being an integrity test step or procedure;
Fig. 30 is a schematic illustration of preparation or set-up which can be useful for a Fig. 23 system;
Fig. 31 is a schematic illustration of filling or priming that can be useful for a system as in Fig. 23;
Fig. 32 is a schematic illustration of filling, fill, which can be useful in a system of the type illustrated in Fig. 23;
Fig. 33 is a schematic illustration of filling, complete recovery, useful in a system as generally illustrated in Fig. 23;
Fig. 34 is a perspective view of an embodiment of a manifold arrangement having modular capabilities;
Fig. 35 is a flow chart illustrating details of an embodiment of a parameter assurance system including lock-out logic;
Fig. 36 is a flow chart illustrating details of a filtration and dispense system top-up module for filling bioprocessing fluid into the system;
Fig. 37 is a flow chart illustrating details of a filtration and dispense system prime module for filling prior to dispensing;
Fig. 38 is a flow chart illustrating details of a filtration and dispense system dispense module to dispense product processed according to the system or method for collection thereof;
Fig. 39 is a flow chart illustrating details of a filtration and dispense system sample module for dispensing a sample portion of processed product; and
Fig. 40 is a flow chart illustrating details of a filtration and dispense system chase module to clear processed product from the filling lines.

### Description of the Illustrated Embodiments

The embodiments disclosed herein are exemplary only, and the subject matter described herein may be embodied in various forms. Therefore, specific details disclosed herein are not to be interpreted as limiting the subject matter as defined in the accompanying claims.

The present disclosure concerns systems and methods for use in providing assurance of compliance with requirements for proper operation of bioprocessing fluid handling systems that include single-use components or consumables, such as the manifold units of the previously referenced patents and published patent applications. Examples of bioprocessing fluids include biopharmaceutical fluids; preparation and media buffers; water used in making buffers; developmental, clinical and commercial drug products, components and formulations; organic solutions and other organic materials, including cells, tissue, byproduct of cell growth; adjuvants; active pharmaceutical ingredients (API's); antibodies; antibody drug conjugates; vaccines; and combinations thereof.

This system and method could be used for any fluid management system including NFF, TFF, Chromatography, Buffer Preparation, Media Preparation, Dispensing, Transfer Applications and Bioreactors/Fermenters. Examples of biofluids that could be subjected to NFF, including what material would be separated/filtered from another material, are preparation buffer, media buffer, water to be used to make the last two, development/clinical/commercial drug products, organic materials and solutions.

A general function of the disclosure is to ensure that a method and/or system being initiated on an automated, semi-automated or manual basis has the correct consumable installed and is within the operational limits and parameters of that specific consumable for the system or method within which it is to be used or with which it is to be interfaced. A typical consumable has a predetermined function within the system or method. Such systems or methods operate on the bioprocessing fluids and include, for example, NFF, TFF, chromatography typically preparative chromatography, bioreactor applications, media preparation, media dispensing, buffer preparation, buffer dispensing, cell banking, drug or biologic fluid bottling or bagging from bulk containers or other sources, vial filling, blow molding and sealing with drug dispensing, liophilization, biologics flash freeze, cold freeze, cryogenic freeze and combinations thereof.

Typical consumables include manifolds; manifold components; tubing sets; connectors; bags, bottles or containers; reactor bags, bottles or containers; valves; and sensors and/or detectors of pressure, temperature, pump rate, mass flow rate, dissolved oxygen, spectroscopy, near infrared (NIR), fluid flow rate, conductivity, manifold holdup volume, UV, OD, NTU, cell density, cell viability, number of dispense containers and/or bottles and/or bags, amount of resin in a filter column, volume, weight, volume and/or weight of dispense quantity, batch-specific information (e.g. ID, date, etc.), concentration factor, diafiltration volume exchanges, quantity of fluid in container, bottle and/or bag, fractionation information, ERP/MRP information (e.g. Kaban, re-order, customer code, project code, lot traceability, electronic batch record identification, serial number, etc.); and other components for bioprocessing systems that are capable of being manufactured and properly disposed of after a single use or after a number of uses in compliance with the specification for that consumable component when used in the particular system such as a manifold system. These can be presented and/or used in various combinations.

A specific consumable is characterized by at least one readable tolerance specification. Typical tolerance specifications include operational detail, a parameter specification, or combinations thereof. Examples include the model of the consumable; consumable ID; date of manufacture; capacity specifications; pressure specifications; temperature specifications; flow rate or other parameter specifications such as limits, range of operation, safety limits, shelf life, use life (time or volume), time, volume or other parameter logged to date on the component, device or system; number of connections and disconnections; and combinations thereof. Operation parameters include pressure, pump rate, fluid flow rate, temperature, conductivity, manifold holdup volume, UV, OD, NTU, cell density, cell viability, number of dispense bottles, volume of dispense quantity, batch specific information (ID, date), concentration factor, diafiltration volume exchanges, quantity of fluid in bag, amount of resin in column of filter.

Each tolerance specification can be in accordance with the intended use such as type of manifold of the system being assembled and the purpose for which is will be used. A primary objective is to define the suitability of the particular consumable for its intended use and the environment of such use. A readable tolerance specification associated with the specific consumable is provided.

Manifold systems or other consumables typically are designed to interface with the non-consumable, which can take the form of a multi-use device. The interaction between one or more consumables and a non-consumable or multi-use device or devices can be by way of docking, assembly, insertion or other suitable approach. Each consumable can have one or more functions, components or devices, thus being a single-point or a multi-point reference system. The consumables can be considered to have one or more readable tolerance specifications. Each can be associated with one or more specification stages and includes means to record data in a transmittable manner These can be considered as medians for pulling information and can include, for example, bar codes, chips, RFID, engraving, pictures, label, memory key, hard wiring, pattern recognition, system picture inspection through pixel recognition (e.g. of manifold or system), internet enabled transmission and verification (e.g. check sum), cellular per use interrogation with supplier servers and check sum, wireless systems and combinations thereof.

The stored information or data can take the form of an operational detail, a parameter specification, or one or more of each. Various embodiments can have different objectives. One objective for some embodiments is to ensure that only a genuine consumable is being used, such as a fluid management device for that system. For example, after an automated system check, a specific consumable can be recognized as non-genuine for use in that manifold system, and/or it can be recognized as having been used previously in order to lower cross-contamination risk. Non-compliance such as in these examples can be noted, communicated and/or used to prevent use and/or continued use. Thus, the disclosure serves as a check for consumables that are not proper or suitable for the use in the system within which they have been inserted. Previous approaches rely on the operator or user to make the determination if appropriate or not for that particular system. As an example, an operator may have selected the wrong consumable, or tried to re-use a previously used consumable, the present system and method would reject the consumable, the manifold of which is a component, or other device or assembly and will not allow the user to operate the system.

Other objectives of interrogating the consumable include determining whether or not a maximum number of runs allowed for the consumable has been reached and/or the number of runs remaining or expended for consumables with a multiple-runs specification. Other objectives involve probing whether or not an encryption code matches the algorithm of the system. Other objectives include determining whether or not a readable tolerance specification or specifications could be inconsistent with the target or limiting specification or specifications of the consumable. Other objectives include ensuring that the system or method is unable to be used outside of recommended parameters, such as safe tolerances, consumable capacity and so forth. Some embodiments combine multiple capabilities and are directed to multiple such objectives.

The present disclosure decreases the likelihood of operational failure due to incorrectly selecting automated or manual parameters. With the overall approach, the operating system interrogates the consumable through a wired, visual and/or wireless communication. This may include scanning a single bar code or several bar codes, reading a single RFID or several RFIDs, or "hand-shakino9g" through a wired or wireless communication protocol to a single or several transmitters and use of other medians as discussed herein. Embodiments can combine one or more such features. Interrogation probes for information stored on a consumable to ensure it is true, complete and specific for the automated system that it is to be used for and/or as a component of.

With the disclosure, in the event the non-genuine or non-approved or out-of-specification consumable is being used on a system, the operating system will communicate this to the operator. In some embodiments, this can result in limiting operation to only a manual protocol.

In a further embodiment, the system can capture information on the consumable so that same is stored in a non-consumable component or some other electronic means for safe storage, manipulation, analysis and/or reporting. Information storage means can be attached to the consumable by overmolding of labels, RFID, transmitters, chips, wires, engravings and so forth with a polymer, alloy etc. through thermal melting, injection and curing, vulcanization, laser welding and/or sealing. Same can include use of a formed clamping device. Typical information in this regard includes serial numbers, lots, manufacturing information, material, and calibration details.

Embodiments achieve equipment parameter verification, automated method activation through an automated physical verification approach, and/or methods to ensure the use of authorized consumable components in the particular system. The operator can choose among application-specific schemes having different objectives in manual operation. The data collection allows traceability information to be safely stored and retrieved as needed.

The present disclosure concerns systems and methods for use in providing assurance of compliance with requirements for proper operation of single-use bioprocessing fluid handling systems, such as the manifold units of the referenced patents and published patent applications. Included are these features, some or all of same in various combinations: (a) This ensures the bioprocessing handling system has the correct consumable (e.g. the disposable components including manifold, its tubing, sensors, containers, bags, valves, sensors, and others as generally noted herein) installed. (b) This ensures the operational parameters are limited to the specification embedded in the system. These include operational limits of the consumable. Examples include: the operator sets an operation pressure that exceeds the upper limit of the consumable; the operator installs a consumable for one procedure (such as tangential flow filtration, TFF) into a normal flow filtration (NFF) unit; and the consumable does not have the needed feedback devices for monitoring compliance. (c) Operational parameters are monitored and operated on by a processor such as CPU, such as pressure, pump rate, fluid flow at a location in the system, temperature, conductivity, manifold hold up volume, UV, OD, NTU, cell density, cell viability, number of dispenser bags/bottles, volume of dispense quantity, batch specific information (ID, date), concentration factor, diafiltration volume exchanges, quantity of fluid in bag(s), amount of resin in filter column. (d) The system includes a reference system (spec storage device or median device, e.g. chip, RFID, barcode, engraving, label, etc.) that has one or multiple such devices. The specs are the application and/or operation limits of the consumable of the particular system. (e) The system includes a reader for the spec storage device, reading medium examples being photo eye, RFID transmitter/receiver, barcode scanner, Bluetooth transmitter/receiver, wireless transmitter/receiver, hardwired communication transmitter/receiver. (f) The operating system interrogates the system for compliance of these specs etc. (g) The system and method ensure an operator and/or automated system is unable to use the system outside the recommended safe tolerances, or ensure the device is genuine, by engaging interlock(s) when out of compliance. (h) This creates an electronic batch record for the consumables being used.

Interlock objectives, when desired and provided, include the following. Interlocks can occur when the operating logic detects operation that is inconsistent with the readable tolerance specification or specifications. For example, an interlock can activate a signal to inform of non-compliance of the consumable. An example has the interlock activate a stoppage function with respect to the manifold system capable of avoiding out-of-compliance operation. Other examples include having the interlock not allow operation through software logic, electromechanical contactor logic, relay logic, visual and/or audio-indication, and combinations thereof.

A "non-genuine" or "non-approved" consumable is one that is not in line with requirements, including these, for example: A manufacturer and/or equipment-specific fluid management processing system such as in applications as noted herein is out of conformity with its specific design to work with optimized and/or approved consumables (fluid management device) with the processing system. A device is non-genuine or non-approved according to what the manufacturer deems inappropriate to work with the processing system. Specific examples are as follows: example 1 of using a consumable that is designed for TFF on a NFF system; example 2 wherein a TFF manifold designed for 15 pounds of pressure operation but an operator initiates a set point of 60 pounds of pressure; and example 3 checking whether or not a TFF manifold designed for a manufacturer's equipment is correct, or a system is assembled without needed feedback devices.

The reference system is a specification storage device (memory chip, barcode, engraving, label, etc.) that is read via different mediums (photo eye, RFID transmitter/receiver, barcode scanner, Bluetooth transmitter/receiver, wireless transmitter/receiver, hardwired communication transmitter/receiver), and combinations thereof. A single or multipoint is defined as the number of devices used on the consumable to transmit the information. The advantage of the multipoint is to have redundant and/or overflow of specifications to read. Multipoint can mean providing redundant points (check sum), multiple points to read from, such as multiple means of reading or multiple different types of reading means. Multiple point reads can indicate correct location of a component within the system. The objective is to minimize the possibility of installing similar parts (which can be a single component or a multi-component part) in incorrect locations of the system.

The systems, devices and methods of the present disclosure need not be limited to inclusion of devices that are gamma stable i.e. the disclosure does not require an electronic system on the consumable that would need to survive gamma irradiation. Examples are ethylene oxide, autoclave, chemical sterilization, or not sterilizing at all.

Application specific methods or recipes include: (a)constant rate NFF; (b) constant pressure NFF; (c) R-P stat method NFF; (d) Manual, which is the only method that could run if a non-genuine consumable was being used on the system; (e) Integrity test; (f) dispense; (g) chromatography; (h) constant rate TFF; (i) constant pressure TFF; (j) simultaneous constant rate and constant pressure TFF using a control valve or pump; (k) simultaneous constant rate and constant pressure TFF using a control valve or pump then switching to constant pressure control via pump; (1) buffer preparation; (m) media preparation; (n) volume transfer; (o) weigh transfer; (p) bioreactor and (q) fermentation.

Static operation and/or static filtration operation can be practiced in association with the disclosure. Also contemplated are dynamic operation and/or dynamic filtration. Typically a dynamic approach is practiced when filtration was not originally planned for a system or method, such as adding filtration capability to a manifold. In such instances software compensates for the additional filtration requirement.

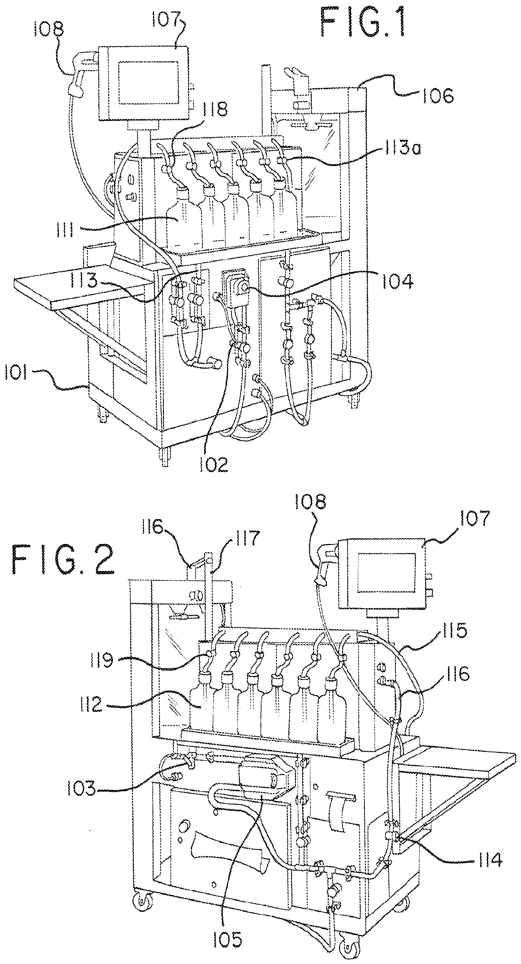

Fig. 1 and Fig. 2 illustrate an embodiment of a fill and dispense system within which the disclosure materials are suitably incorporated. Included in this illustration is a cabinet 101, dispense pressure sensor 102, filtration pressure sensor 103, dispense pump 104, filtration pump 105, weigh station 106, control panel 107, such typically including a touch screen display or other communication means, and a median component 108 (e.g. a bar code scanner). Also included is a processor (not shown) including software or control logic for manifold operation, operations of loading, administration and data collection. While the median for pulling information 108 is a bar code scanner, other median systems as discussed elsewhere herein are suitable for pulling information used as the boundary conditions in following the automated parameter assurance system and method of this embodiment.

This particular embodiment shows multiple supply containers 111 and collection containers 112, each of which can be bags, bottles or other containers. Also shown are valves which can be components of different modules and can function within a chase module (including a chase air input 113 and chase valve 113a), a module with a sample location and for integrity testing and purge air system (including valve 114 for integrity test and purge air input). A process air regulator 115 and a process air output passage 116 (such as a tube length) are shown. A spine vent 116 and stack 117 are shown in Fig. 2. Fluid passage with respect to containers 111 is regulated by respective valves 118, and fluid passage with respect to containers 112 is regulated by respective valves 119. These containers, valves, sensors, tubing, passageways and other components are exemplary consumables of Figs. 1 and 2.

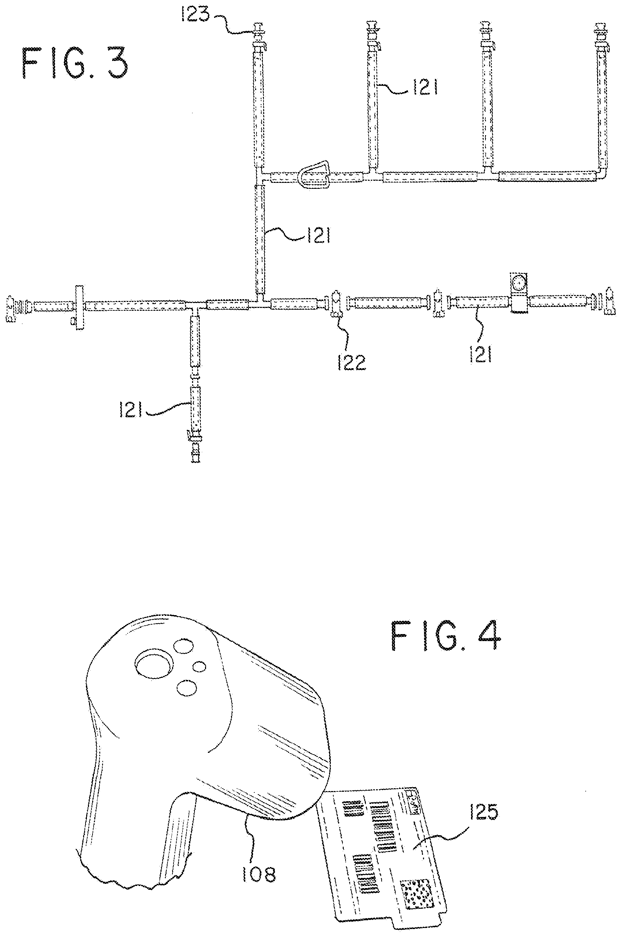

Fig. 3 provides an example of a filtration manifold of the type that can be incorporated into systems according to the present disclosure. The system is modular in that a plurality of channels, typically of tubes 121 are joined aseptically, such as by connectors 122. End connectors 123 aseptically join a tube component to a container such as 111 and/or 112 in Fig. 1 and Fig. 2. One or more sensors 124, such as pressure sensors, are positioned within the manifold. Fig. 4 illustrates a disposable with a bar-coded label being scanned by the scanner 108.

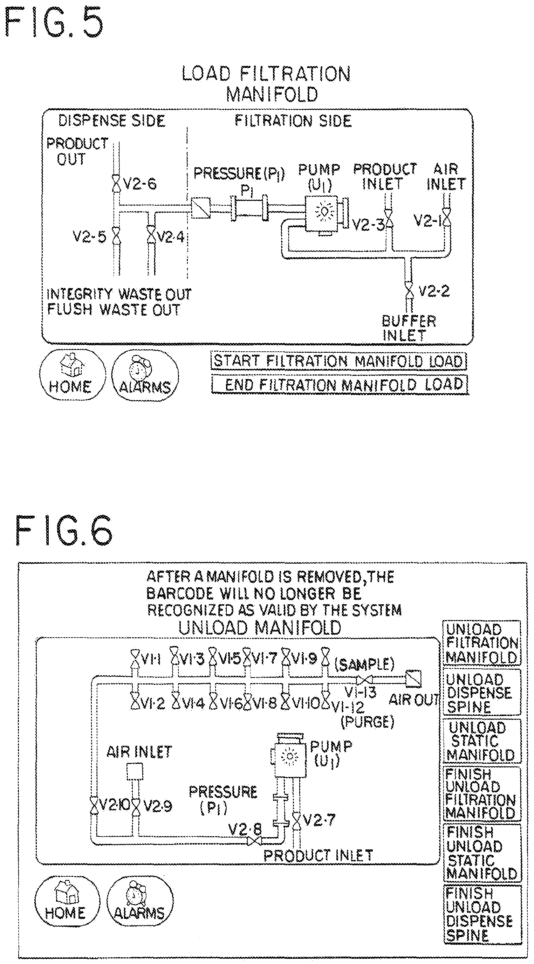

The load filtration manifold display of Fig. 5 has a step-wise method with user prompts to load a static filtration manifold. Valve icons can change in appearance to indicate opening, closing and so forth. The Fig. 6 upload manifold display embodiment can have a step-wise method with user prompts to unload the static manifolds and choose whether to unload a filtration or dispensing manifold. In a feature, once the "finish unload" button has been pressed, that particular manifold cannot be re-scanned into the system, and a new manifold will need to be installed before further use. A launch page allows operators to have the ability to create, store and modify methods for the automated execution of filtration and dispensing processes. For example, the user can be presented with a number of options such as filtration, flushing, air purging and integrity testing.

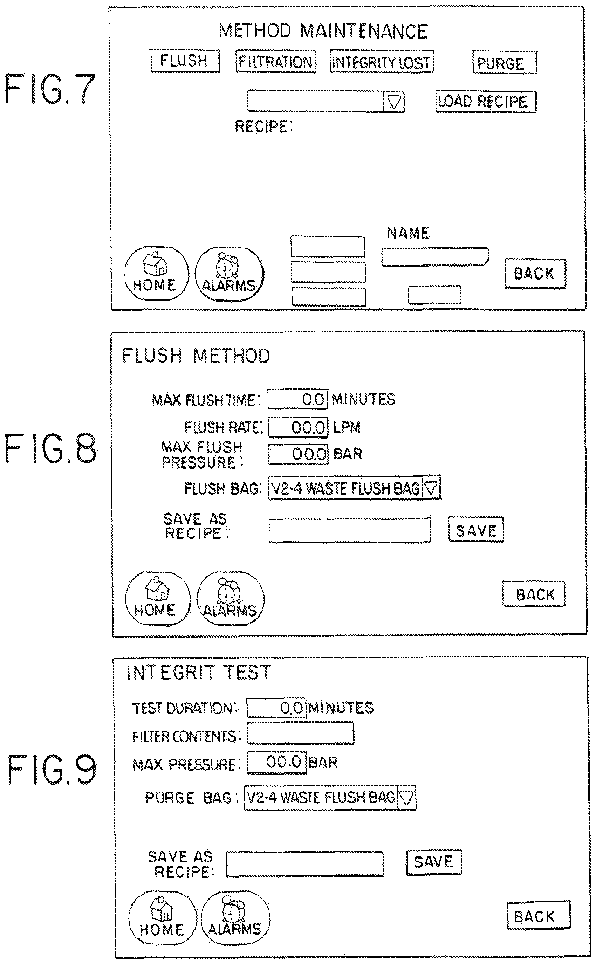

At the Fig. 7 display, method maintenance gives the operator the ability to modify or delete stored methods in the system, which can include parameter field populating with stored values for the chosen method. The Fig. 8 flush page typically launches a parameter table and storage method screen for creation and storage. In an air purge mode, operators are able to create and store filtration manifold air purge methods. A product filtration page can be provided to launch a parameter table and a storage method screen for creating and storing product filtration methods. Typical modes of filtration able to be selected are: constant rate, constant pressure, and rate/pressure stat to pump fluid to the filter and run it at a constant rate until accumulated material on a filter causes back pressure to exceed a user-defined value, resulting in feed rate reduction to maintain the pressure under the designated limit.

Integrity test information is illustrated in Fig. 9 whereby a parameter table is launched and operators are able to create and store filter integrity test methods. This allows an operator to enter integrity test values for test duration, filter wetting fluid, feed pressure and a downstream container or consumable to be used. Integrity testing provides instantaneous "average over duration" readings of a diffusional flow rate. When concerned with filters, integrity testing can incorporate test parameters from the filter manufacturer.

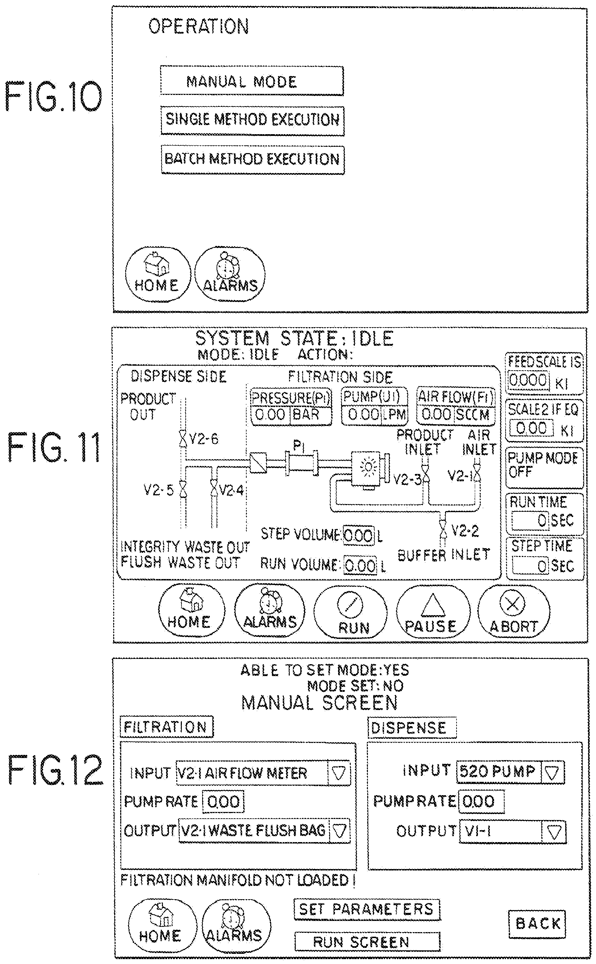

The Fig. 10 operation page is a typical launch page. Fig. 11 illustrates a run screen for commencing a method sequence, illustrating fluid processing, and display in a single area. Exemplary information includes read-in values from devices, set point values to devices, alarms, interlocks, recipe parameters, and calculated values. Typically, no recovery paths are built into the flow path. If any interlock were to occur, the system will halt, go into idle and wait for the condition to be corrected before the operator can continue the sequence.

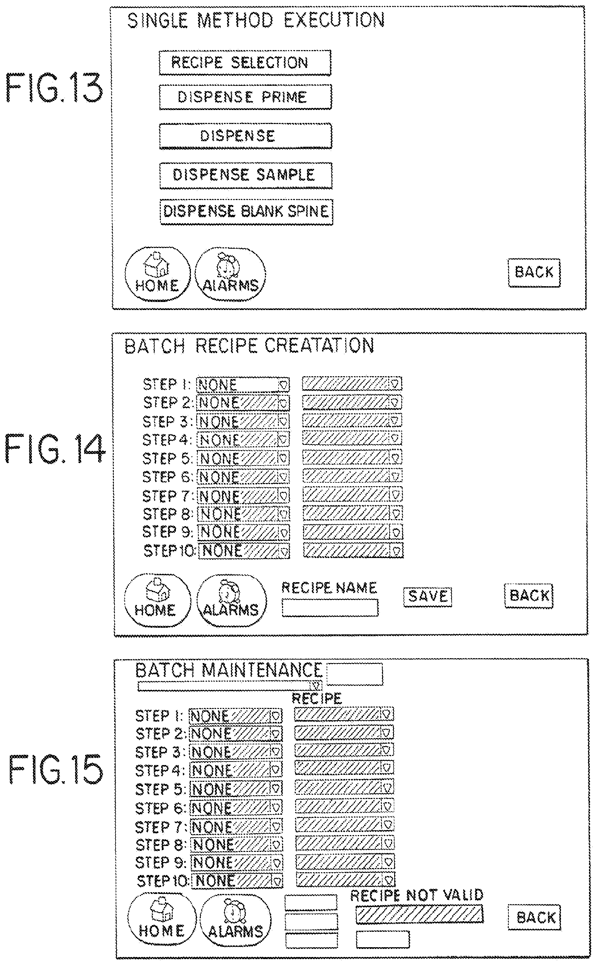

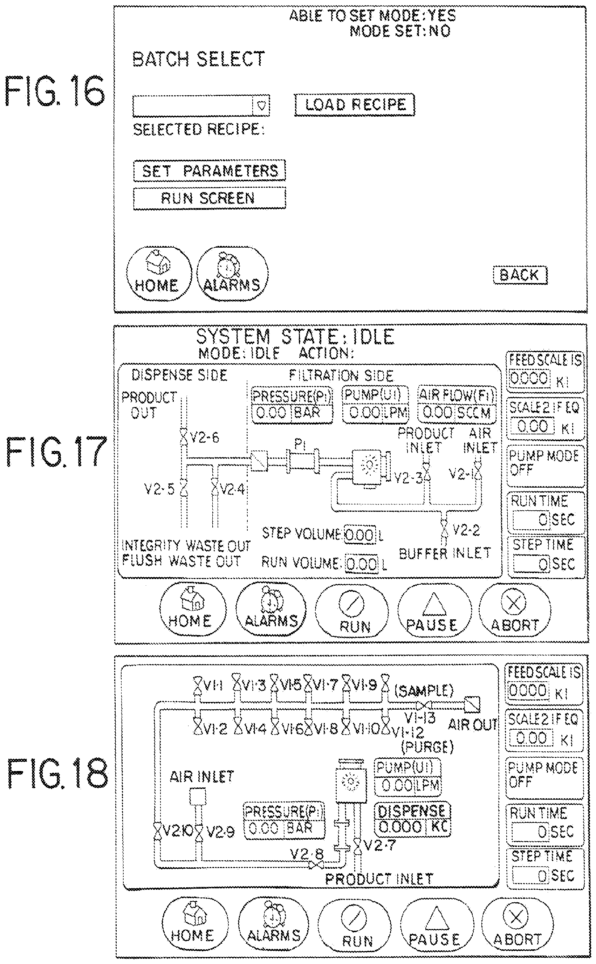

A manual mode option is illustrated in Fig. 12, allowing system operation without a predetermined stored method. This mode is bound by flow paths but not individual valve operation and is useful for testing and verifying flow paths and can be used for clearing a flow path for product recovery if needed. This will not interlock if high pressure is created, but it will prevent undesirables such as pumping against a closed valve. The Fig. 13 single method execution page displays when allowing a single automated filtration or dispensing method. Batch recipe or protocol creation and batch maintenance are illustrated in Fig. 14 and Fig. 15, respectively. Batch method select execution is illustrated in Fig. 16, allowing operators to run a complete sequence of operations to complete a batch process.

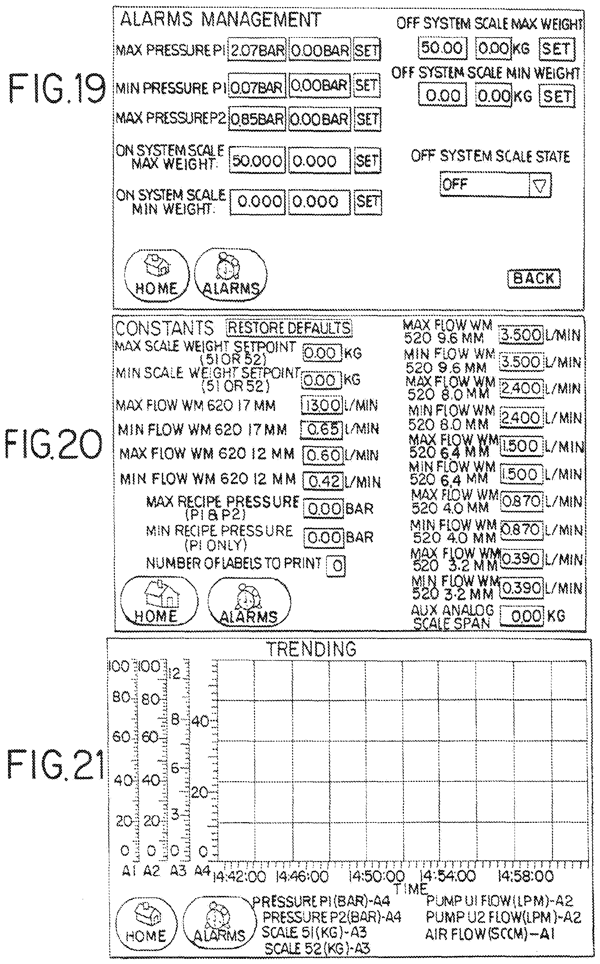

Fig. 17 and Fig. 18 show a display for an idle system state. Typically at this stage all valves are closed. This moves to prime a preset volume of fluid. A dispense page can be provided to display the sequence of operations as they are executed and, where appropriate, prompt the operator for inputs or confirmation. In this regard, alarm settings are illustrated in Fig. 19, allowing the operator to modify alarm parameters, including in/out flow, pressure, temperature and/or conductivity, when included in the system. Fig. 20 illustrates constants to allow an administrator to enter or modify programmed constants tied to the software being run. This allows limitations to be set for working parameters so the operator cannot set values exceeding same. Trending can be monitored as illustrated in Fig. 21. Examples include monitoring flows, pressures and weights of input and of product.

The system and method can follow various schemes or recipes. These include the following. Constant rate NFF maintains rate, monitors pressure and ensures pressure does not exceed a set point. Constant pressure NFF maintains pressure, monitors rate, and ensures rate does not exceed a set point. Rate/pressure stat method NFF maintains a flow rate until pressure set point is reached, at which stage the system will switch to pressure control reducing flow rate until the user-definable limit is reached. Manual operation allows the user to define a motor set point, inlet valve set point, directional valve control set point and manual prime function. An integrity test pressurizes the filter manifold with filter manufacturer recommended pressure for diffusion testing, with rate of diffusion being checked and validated as appropriate. Dispense has aliquots and number of samples programmed based on the available manifold.

Embodiments include NFF that automatically monitors, adjusts and documents pre-filter back pressure and flow rate to optimize filtration speed, maximize filter throughput, and eliminate the need for constant supervision during filtration runs. Integrity testing can be included to check the sterilization grade filter post filtration process, using a sterile air source connected to a thermal mass air flow controller.

Dispensing embodiments volumetrically or gravimetrically dispense solutions to containers, bottles, bags or other consumables. Median readers scan or otherwise capture data stored, typically on the consumables or packaging or labeling for same, for indicating properties. An example uses a barcode reader which can identify parameters such as tubing size, container size, total number of a type of consumable, and so forth. Typically, this information becomes parameter value limiters (maximum and/or minimum) for the recipe or protocol entry. Results include automatically dispensing solution into the containers having their corresponding labels and medium.

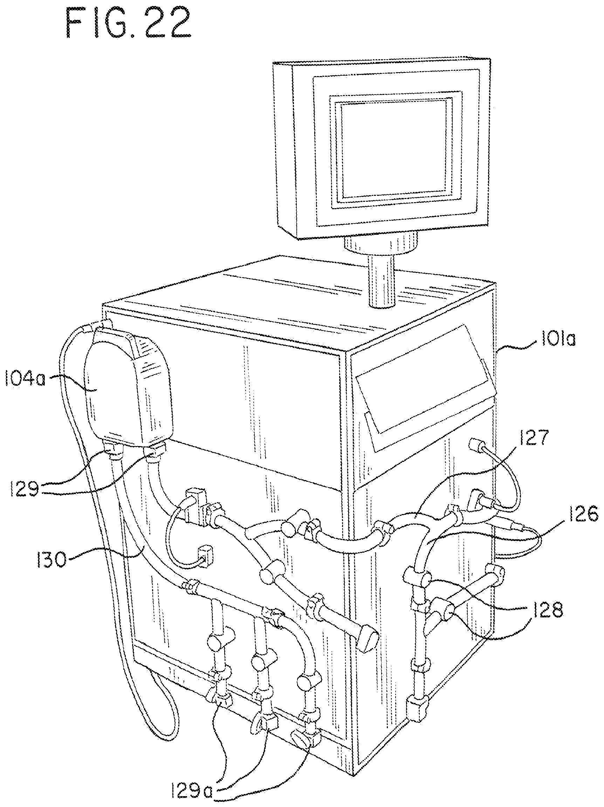

Fig. 22 illustrates an embodiment of a system and illustrates a manifold arrangement which can be suitable for NFF strategies. This embodiment includes a network of connected passageways, shown as tubing in this Fig. 22. Included are cabinet 101a, control panel 107a associated with median reading, dispensing pump 104a, upstream manifold 126, each manifold having tubing lengths 127, valves 128 and connectors including pump connector 129. Downstream manifold 130 includes connectors, including pump connector 129 and other connectors 129a for receiving containers (not shown in Fig. 22). Any of these components can be a consumable with one or more median components allowing the parameter assurance of this disclosure.

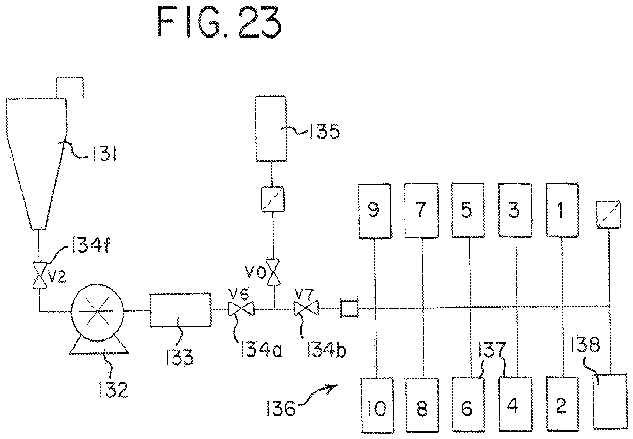

Fig. 23 provides a schematic of a full process for preparation, including a bioprocessing container (BPC) 131, pump 132, pressure sensor 133, upstream valve (V2) 134f, downstream valves (V6, V7, V0) 134a, 134b, 134c, gas flow meter 135, and a manifold (generally designated at 136) having multiple containers 137 (labeled 1 through 10) and a quality-control container 138.

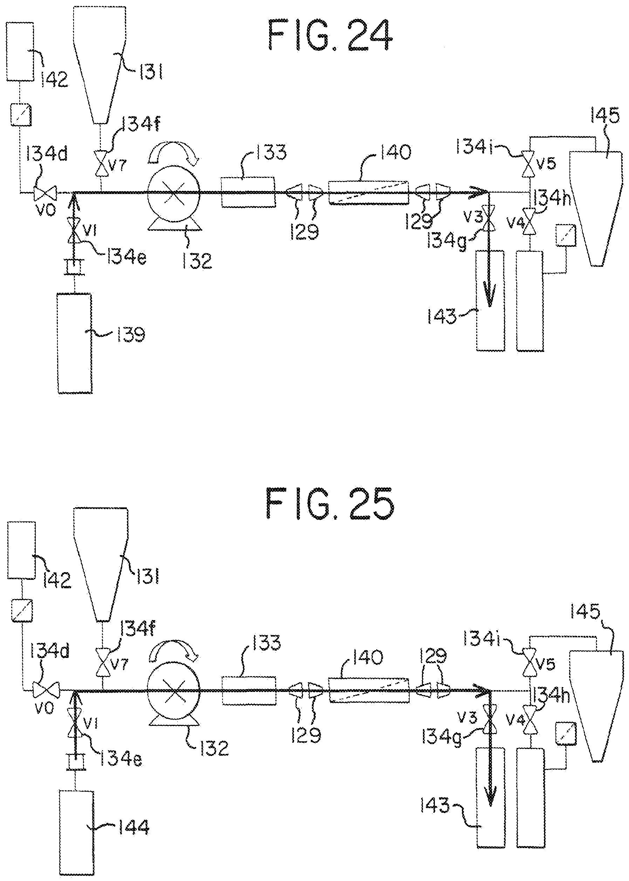

Fig. 24 illustrates step 1 of this system in which the operator aseptically attaches flush solution source 139 to the system at a location just upstream of the bioprocessing source or container 131. The flush sequence recipe or protocol is initiated by the operator or automatically, facilitated by gas flow meter 142 and valves (V0', V1 and V2) 134d, 134e and 134f. For example, step 1 proceeds with valve 134e open and valves 134d and 134f closed. Then, the flush solution is aseptically removed from the system after passing through and flushing the filter 140 and into waste process container 143 with valve (V3) 134g open and valves (V4, V5) 134h and 134i closed.

Equilibration proceeds in step 2 according to Fig. 25. The operator aseptically attaches equilibration solution to the system from a solution source or solution container 144. Inflow of equilibration solution is closely upstream of the input or retentate BPC 131, facilitated by gas flow meter 142 and valves (V0', V1 and V2) 134d, 134e, 134f. Equilibration solution after having passed through the filter 140 is collected and aseptically removed downstream of the filter and upstream of the receptor or filtrate BPC 145.

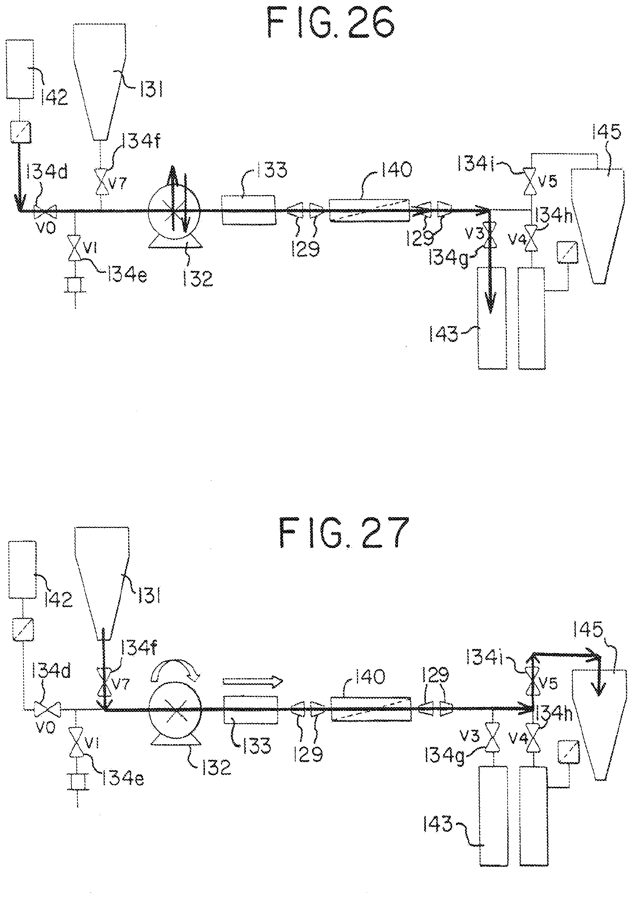

Fig. 26 shows the step 3 air purge which follows a path similar to step 2 during which flow restrictions are lessened or removed. For example, when pump 132 is a peristaltic pump, its front head rollers are opened. A recipe-based line purge is initiated by operator or automatically, the impetus for the purge being from the gas flow meter, with the material purged from the system being moved to the waste process container 143 or outflow. Then the peristaltic head, if a peristaltic type pump is used, is subsequently closed, or the system is again moved to full operation. In this step 3, typically valve 134d is open and valves 134e and 134f are closed.

Filtration proceeds as illustrated in step 4 of Fig. 27 wherein a recipe-based filtration sequence or protocol is operator or automatically initiated, typically with valves 134f and 134i open and valves 134d, 134e, 134g and 134h closed. Then the bioprocessing solution is pumped from the bioprocessing fluid container or source 131, monitored, filtered and collected in the downstream BPC or bioprocessing solution collector 145 which can be a container as shown or a conduit or other means for receiving filtered fluid aseptically. This sequence completes based on pressure monitoring for achievement of a maximum or other threshold pressure, gravimetric feedback or operator control. For example, pressure can be monitored and controlled by a single-use pressure sensor preventing over-pressurization of the filter.

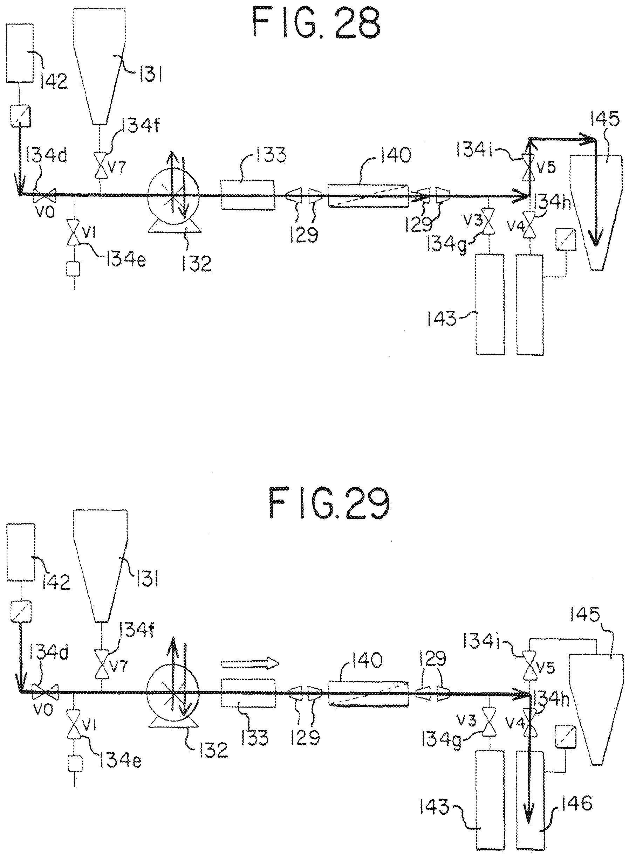

Product air purge can be carried out as illustrated in Fig. 28 as a step 5 with gas or air source including the gas flow meter 142. Flow restriction adjustment proceeds and then the system is brought back into operation. For example, when a peristaltic pump is included, the pump head rollers are opened. A recipe-based line purge to product collector 145 in initiated automatically or by operator choice. For example, valves 134d and 134i are open and valves 134e, 134f, 134g and 134h are closed, and purge by air or other gas proceeds to collect residual product in the system. Once the sequence completes, the peristaltic head is closed as needed.

Integrity testing can be carried out as a step 6 as shown in Fig. 29. With this integrity test, the pressure is monitored, and the gas flow meter 142 monitors diffusion across the filter 140, with valves 134d and 134h open and valves 134e, 134f, 134g and 134i closed. Flow restriction adjustment proceeds and operational pumping is re-established after this integrity test. During the test, preprogrammed pass/fail values are provided in the control logic to indicate results of the operator-initiated or automatic test. If a filter passes the integrity test, the solution is sampled and stored and/or dispensing begins. If the filter does not pass the integrity test, the process needs to be repeated, and the downstream BPC container or collector 145 acts as the original retentate container or source 131.

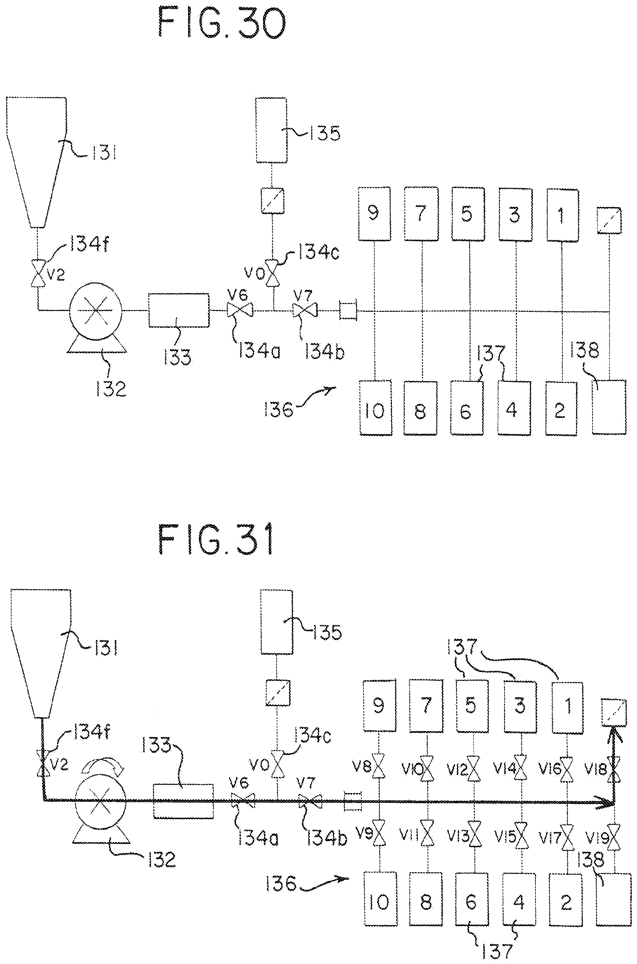

Preparation setup for this multi-step embodiment is illustrated in Fig. 30 whereby the system is reconfigured for dispensing. The dispense manifold 136 is installed and secured, such as by welding or aseptic connector. The median (e.g. bar code) associated with the manifold is interrogated, uploading parameter information in accordance with this disclosure. Uploading can also include manifold characteristics. Priming for filling is illustrated in Fig. 31 wherein a prime sequence is initiated which automatically stops based on gravimetric feedback and predetermined manifold hold-up. For example, the operator or a recipe or control logic sets the number of containers 137 to be filled and aliquot quantity. With the prime sequence initiated, the sequence automatically stops based on gravimetric feedback and predetermined manifold hold up. Valves V8 through V19 open or close access to its associated container 137. Typically containers 137 are filled one at a time until the programmed or selected weight or volume is attained consistent with the volume of each container and the make-up of the product bioprocessing fluid. One or more or all of the containers 137 can be filled with purified, filtered and/or collected product

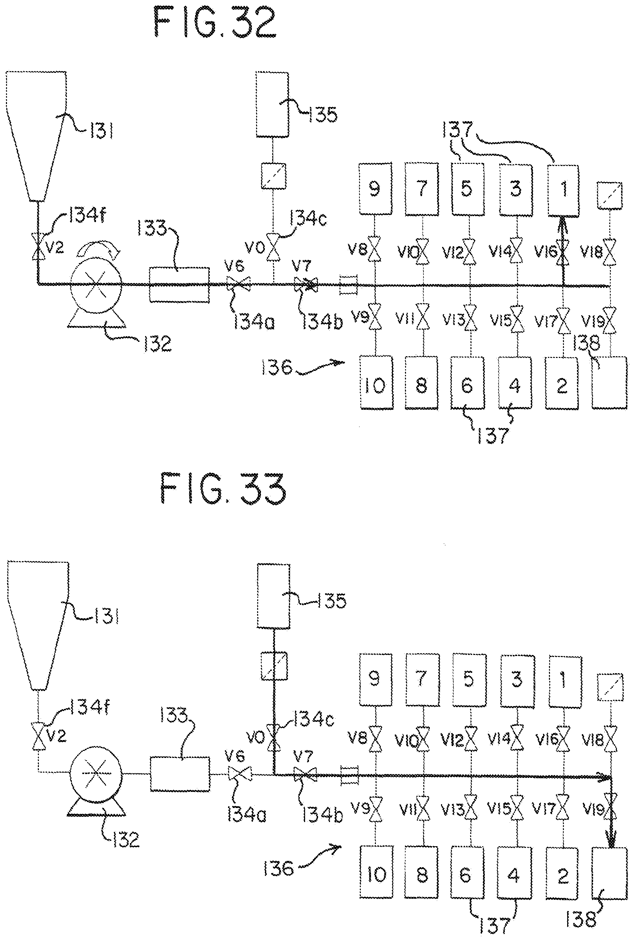

The process continues as illustrated in Fig. 32 automatically filling the desired number of containers 137 to a programmed set point. Filling proceeds until the program is completed. When desired, labels are printed as the containers are filled, so as to be in compliance with URS addendum requirements. Complete recovery is shown in Fig. 33, with the system typically being designed to capture as much hold-up volume as possible. If any fluid is in a container stem or the like, filtered air is provided to push as yet unrecovered fluid into the quality control container 138. For example, air via gas flow meter 135 flows through open valves 134c, 134b and V19 for access to the quality control container 138 or other container as desired. The quality control container 138 is sized based on available options and step hold-up volume. One can consider that the amount in the quality control container equals the line volume.

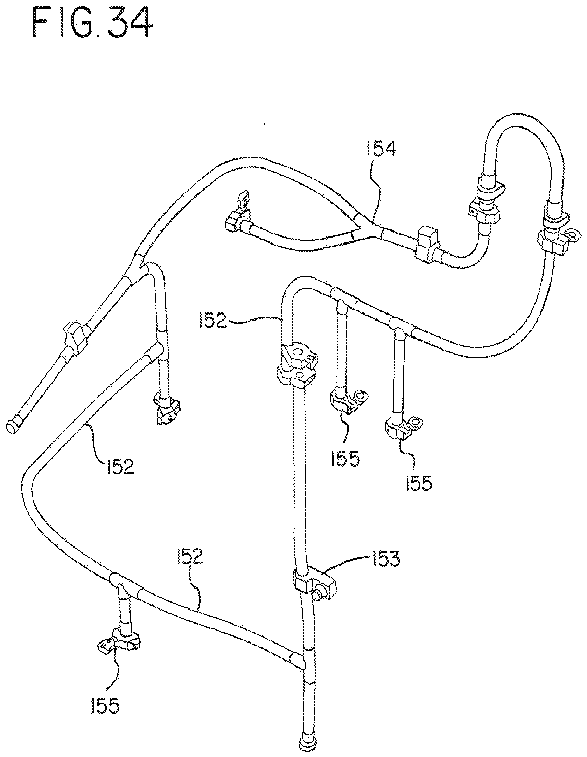

The embodiment of manifold, generally designated at 151 in Fig. 34, illustrates the modular nature of manifolds of this disclosure. Tubes 152, valves 153, joints 154 and connectors 155 are shown. The manifold system can be designed based on container requirements, joints or connections desired, keying, valving or other one-way installation features. The GMP traceability of manifold production can be tied into production labels. It will be appreciated that features of this type allow for flexibility and additional manifold design additions allow significant hardware modifications.

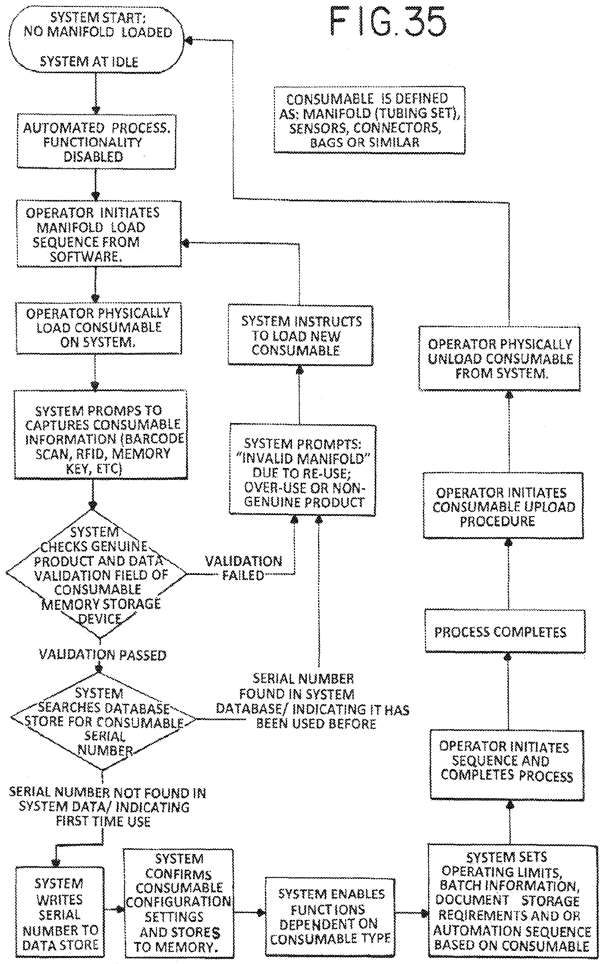

The flow chart of Fig. 35 illustrates details of multiple stages of an overall embodiment or embodiments. The full flow chart illustrates various options that can be included or excluded as desired. With the system initiated, the operator loads a consumable or a plurality of consumables, and the system prompts to capture consumable information by any of a variety of information storage and retrieval approaches. These include one or more of the medians for pulling and transmitting information discussed herein, such as bar code, RFID, hard wiring, wireless, memory key and the like such as those noted elsewhere herein. This allows for the operating logic that controls interrogation of the specific consumable with respect to one or more of each of its readable tolerance specifications defining suitability of the consumable for use in the particular system. If the validation fails, messaging and/or interlocking or stoppage ensues until a new consumable is loaded. Typically the operational logic determines whether or not the specific consumable is operating consistent with the readable tolerance specification for the consumable and/or for the non-consumable, system or method.

If the validation interrogation passes, in the illustrated embodiment of Fig. 35, the system searches for consumable serial numbers. If located, this indicates the serial number is in the system and thus the consumable has been previously used, leading to messaging and/or interlocking similar to the validation failed path. If a serial number is not found in the system, this indicates a first-time use; appropriate information is located, stored and/or generated as needed.

In the Fig. 35 illustrated embodiment, the system sets operating limits, batch information, document storage requirements and/or an automation sequence, typically primarily based upon the recognition of the information from that particular consumable. Once the process is completed, this embodiment requires the operator to physically unload the consumable before proceeding with a subsequent operation.

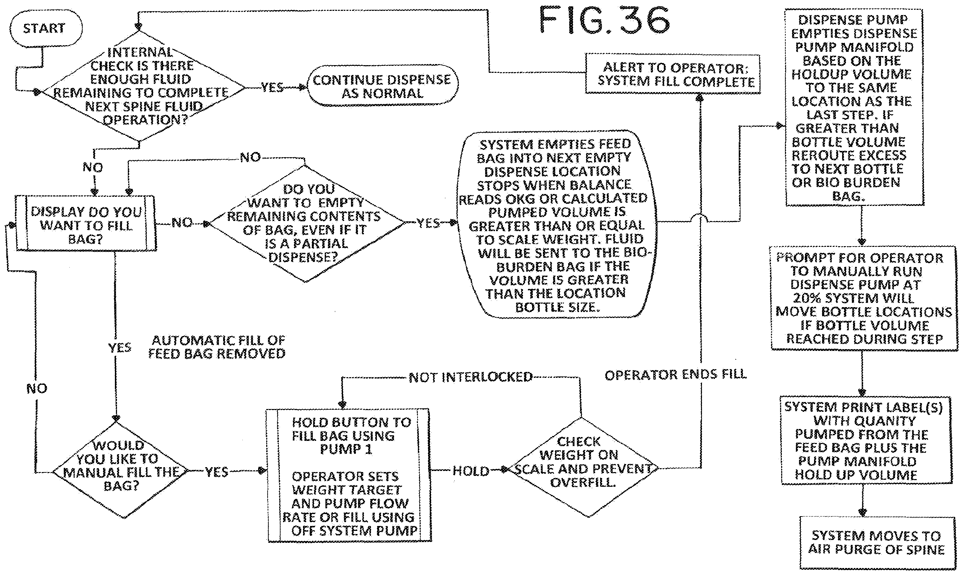

Fig. 36 is a flow chart illustrating operational or software architecture details for an embodiment of a top-up module operation of the system and method. This functions to fill an intermediate quantification container with product to be dispensed for filtration or other operation such as discussed herein. In an embodiment, product is filled according to volume specified by the automated system. In another embodiment, a dispense sample size parameter is included in the dispense Spine setup screen for the system and method allows the user to set the quantity of the fluid dispensed during a sample for dispense Spines, typically those considered to be of a standard recipe. This enforces the minimum and maximum sample dispense amounts equal to the same limits as the other bottles of the Spine. Otherwise, in a fallback mode the dispensed sample amount is equal to that of the other containers, bottles or bags of the Spine. Typical maximum fill amounts for a container can be set to a value less than 100% of the container volume. Maximum amounts of 80% or 85% are examples, found to positively affect fluid movement in the system.

When the user chooses to top-up, an embodiment of the system and method present the user with a prompt to enter both a target weight and a feed pump flow rate. With this embodiment, the user is required to enter a maximum fill time (in minutes). After implementing the "run" mode, the system will pump until the first of three criteria is met, namely: the stop button is pressed, the fill time set at the timer expires, or the target weight is reached.

The flow charts of Fig. 36 through Fig. 40 at times reference a Spine fluid operation. The Spine is the flow path that connects the intermediate holding container with the fluid containers that are to be filled. The term Spine Fluid refers to the biotechnology fluid that is to be filled by the user of the system, such as biopharmaceutical fluids, preparation buffers, media buffers, water used in making buffers, developmental drug products, clinical drug products, commercial drug products, organic solutions and other organic materials, and others as discussed elsewhere herein. The Spine Mode is the dispensing module where fluid flows through the designated flow path into containers or other collectors.

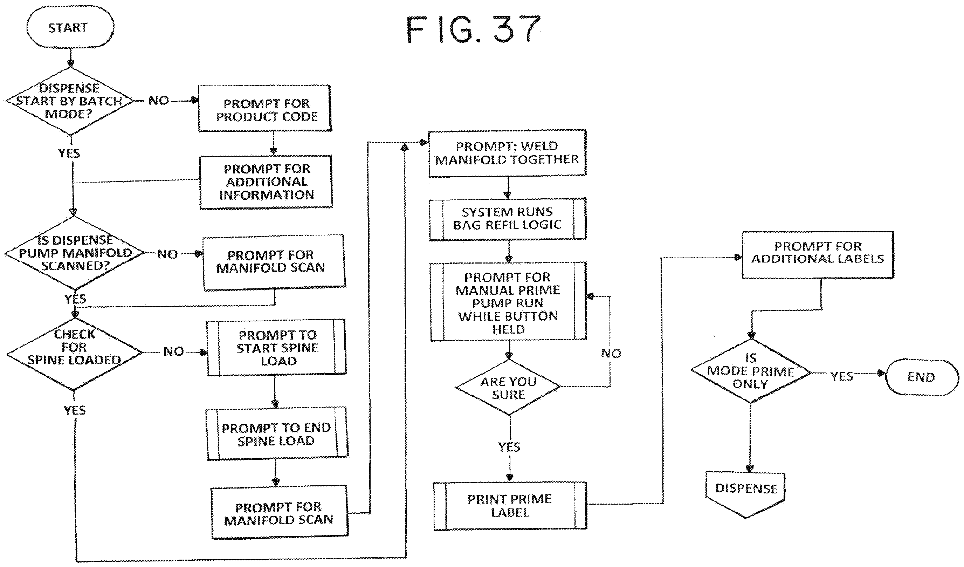

Fig. 37 is a flow chart illustrating operational or software architecture details for an embodiment of a prime module operation of the system and method. This prime module functions to fill the system, such as manifold tubing and other components, with product prior to the dispense unit operation. Filling the Spine with product purges air from the line and increases the accuracy of each dispense. Priming of the line in this embodiment is automated with required parameters programmed into the system. An embodiment of a dispense prime mode has an operator initiate prime via a single method execution or a batch execution. The system can scan to make sure manifold or other consumable information is stored in the system. If this gives a failed message the display can prompt for bar code scanning (or other medium application) or manual entry of manifold and/or components information. If the manifold is not loaded, a prompt can be displayed. After load sequence is followed, all valves are open on dispensing manifold. Once the manifold is loaded and confirmed, all valves close on the dispensing manifold. A display can appear to prompt medium application (e.g. bar code scanning), and data is saved in memory. With an abort option, if followed, closes on dispensing manifold close. If no abort or alarm mode, dispense prime completes and is so signaled.

In an embodiment, before the prime sequence of the dispense method is run; the system will check and prompt the user if a fill of the container, bottle or bag is required. This will occur before every prime when this embodiment is practiced. For example, the system will prompt the user inquiring "does the feed bag need to be filled? The system state prior to this action taking place will impact on the need for user intervention.

During a dispense mode, after the system has run a top-up cycle, an embodiment provides an onscreen prompt stating that the top-up cycle has completed and the system will resume the next phase of operation. In a specific example, the system will prompt the user: "Do you want to return to top-up or continue to dispense?

In one embodiment, if the user presses "yes" to an inquiry: "Is the pump primed?", the dispense Spine will be primed automatically. In another embodiment, the user is not prompted whether or not the system is primed. Instead, prior to priming action taking place, the user is always presented with a manual prime dialog box where the user can adjust the prime as needed.

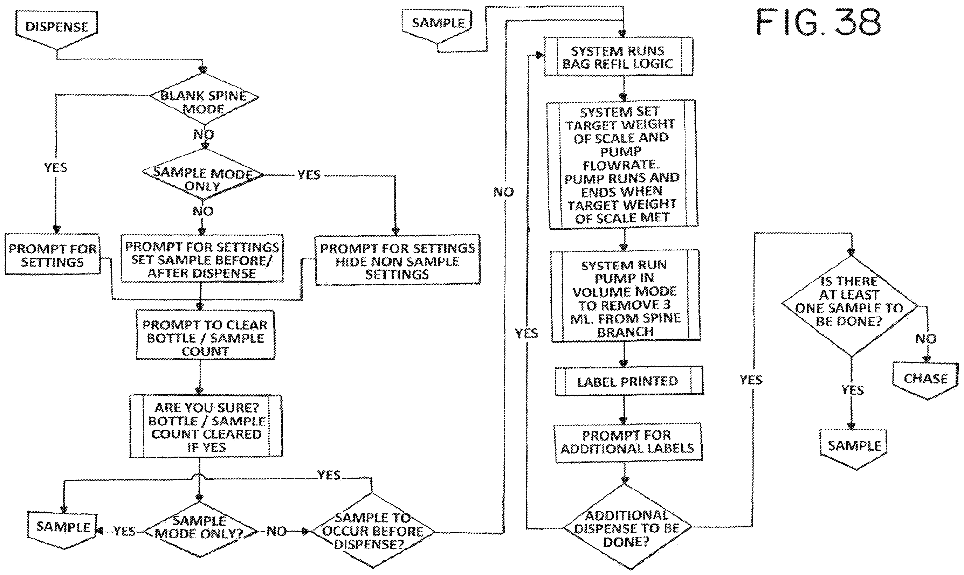

Fig. 38 is a flow chart illustrating operational or software architecture details for an embodiment of a dispense module operation of the system and method. In the dispense mode, information from the flow path is used to dispense processed product for collection such as into storage containers. The system is able to dispense product according to the container volume indicated by the flow path. Dispensing occurs from the intermediate storage container according to this embodiment thereby quantifying the amount of processed product to be dispensed.

In a dispense module embodiment, a prompt checks for scanned in memory. A prompt can be received to input the number of containers to be filled on the manifold. A prompt can be received to input the amount of fluid to be dispensed. If less than 80% (or other value such as 85%) of container volume, the system continues; if equal to or greater than 80% (or other percentage) of container volume, system does not proceed and a prompt is received that the value is too high and to make a change. Flow rate entry checked for adequacy by system, and if too high returns to value input. Similar prompts and checks can be included for stored parameters, welding of static manifold and dispense manifold together, checking pump head position. The method loads the stored parameters and initiates sequence. Further the system can ensure the valve to the filter vent is closed and the valve to the first container or bag is open. The pump executes at the programmed rate. The system can check for accurately filled container or bag, the pump stops and the valve is closed. Labels can be then printed. The display can indicate all containers are filled or not and containers can be sealed.

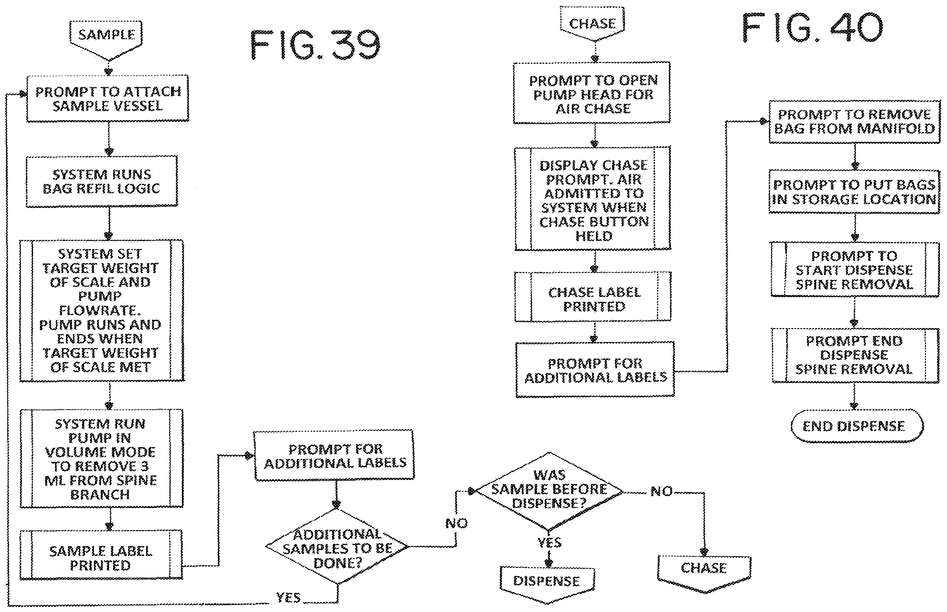

Fig. 39 is a flow chart illustrating operational or software architecture details for an embodiment of a sample module operation of the system and method. This module functions as a method to dispense some product for sampling purposes. This can be a component of quality control. In an embodiment features of the dispense module proceed, except a sample volume is chosen.

Fig. 40 is a flow chart illustrating operational or software architecture details for an embodiment of a chase module operation of the system and method. This module functions to clear the filling lines of remaining product and capture remaining liquid or other fluid to prevent waste of processed product.

The various modules of Fig. 36 through Fig. 40 are linked together by the fluid flow path. The filling system software encompasses all of the modules for controlling operation and interaction sequencing of the modules. It will be appreciated that specific objectives and requirements of the processing, filtration and dispensing of the biotechnical fluid will require different components and different arrangements of the components for each given use.

Certain features of some embodiments provide an especially intuitive operation in final product recovery and if refill is to proceed. If a user responds in the negative in response to a "do you want a refill" inquiry, a message will display "System will dispense reserve fluid and you will be unable to refill at this point. Do you want to continue? If no is chosen, the refill prompt returns. If yes is chosen, the control logic of the controller calculates by dividing the sensed remaining weight by the dispense setpoint. If this calculation is >1.0, then the system dispenses one additional container, bottle or bag into the next available container. Simultaneously the label will be printed reporting weight in container. The system will prompt for additional fill and labels. After the same type of calculation, the process repeats until a value <= 1.0 is calculated. At this point, all of the pump volume remaining in the dispensing container (typically minus an offset to account for container weight, or example weight criteria are used in determining volume) is filled into the next container, bottle or bag, with the calculated weight being printed on the label. In an embodiment, thereafter the system and method will automatically pump the line dry into a container, bottle or bag not intended to be product. Either automatically or in response to a user prompt the system can move to bioburden "purge" to start the air purge logic.

Generally the system and method can provide a sequence of events that can be considered to fall under the general categories of: filtration sequences, dispensing sequences, method execution, loading of manifolds, and unloading of manifolds.

It will be understood that the embodiments described above are illustrative of some of the applications of the principles of the present subject matter. Automated parameter assurance systems and methods for systems and methods within which consumables and non-consumables interact and function that are constructed in accordance with this disclosure may include a number of structural and functional aspects depending on the specific design chosen. Numerous modifications may be made, including those combinations or features that are individually disclosed or claimed herein.

## Claims

1. A system for processing bioprocessing fluids, comprising:
a. the system includes a manifold, one or more consumables and at least one non-consumable, each consumable and non-consumable having a predetermined function, wherein the system combines the consumables and the non-consumables, the system being for purifying, filtering or collecting of a bioprocessing fluid;
b. at least one of the consumables is a specific consumable **characterized by** readable tolerance specifications that are embedded within the specific consumable or its packaging and that define suitability of the consumable for use in the system, which readable tolerance specifications are associated with the specific consumable, one of the tolerance specifications being the consumable is a non-genuine consumable for that manifold system, and another of the tolerance specifications being an operational detail, a parameter specification, or combination thereof to define suitability of the particular consumable for its intended use and the environment of such use,
c. the non-consumable includes operating logic that controls interrogation of the specific consumable with respect to said readable tolerance specifications thereby determining whether the specific consumable is operating consistent with the readable tolerance specifications; and
d. an interlock that activates to inform on non-compliance of the consumable when the operating logic detects operation inconsistent with at least one of the readable tolerance specifications, wherein the interlock activates a stoppage function with respect to the manifold capable of avoiding out-of-compliance operation.

2. The system in accordance with claim 1, wherein the specific consumable is recognized as non-genuine for use in that manifold system when at least one of the readable tolerance specifications is interrogated and determined inconsistent with that readable tolerance specification.

3. The system in accordance with any of the preceding claims, wherein the operational logic probes whether or not the correct consumable for said system is installed and is within the operational limits and parameters of that specific consumable for said system.

4. The system in accordance with any one of the preceding claims, wherein the consumable includes multipoint readable tolerance specifications that are accessible by the non-consumable and operated on by the operating logic of the non-consumable, preferably wherein the multipoint tolerance specification provides redundant points (checksum), multiple points to read from, such as multiple means of reading or multiple different types of reading means, wherein reads of the multipoint tolerance specification indicates correct location of a component within the system and minimizes possible installing of an incorrect consumable for the system or at an incorrect location of the system.

5. The system in accordance with any one of the preceding claims, wherein at least one of the readable tolerance specifications employs communication for the interrogation that includes barcode, RFID, wireless, memory key, hard wiring, chip, engraving, label and combinations thereof, and/or wherein the interlock activates to inform of non-compliance of the consumable.

6. The system in accordance with any one of the preceding claims, wherein the bioprocessing fluid for processing is selected from the group consisting of biopharmaceutical fluids; preparation and media buffers; water used in making buffers; developmental, clinical and commercial drug products, components and formulations; organic solutions and other organic materials, including cells, tissue, byproduct of cell growth; adjuvants; active pharmaceutical ingredients (API's); antibodies; antibody drug conjugates; vaccines; and combinations thereof.

7. The system in accordance with any one of the preceding claims, wherein the system is a fluid management system selected from the group consisting of normal flow filtration, tangential flow filtration, chromatography, buffer preparation, media preparation, dispensing, transfer applications and bioreactors/fermenters.

8. The system in accordance with any one of the preceding claims, wherein said consumable has a predetermined function within the system, the system being selected from the group consisting of normal flow filtration, tangential flow filtration, chromatography, preparative chromatography, bioreactor applications, media preparation, media dispensing, buffer preparation, buffer dispensing, cell banking, drug or biologic fluid bottling or bagging from bulk containers or other sources, vial filling, blow molding and sealing with drug dispensing, liophilization, biologics flash freeze, cold freeze, cryogenic freeze and combinations thereof.

9. A method for processing bioprocessing fluids, comprising:
a. providing a manifold, consumables and non-consumables each having a predetermined function, wherein the consumables and non-consumables combine into a system for processing by purifying, filtering or collecting of a bioprocessing fluid of a selected type;
b. said providing of at least one of the consumables selects a specific consumable **characterized by** readable tolerance specifications that define suitability of the consumable for use in the system, which readable tolerance specifications are associated with the specific consumable, one of the tolerance specifications being the consumable is a non-genuine consumable for that manifold system, and another of the tolerance specifications being an operational detail, a parameter specification, or combination thereof to define suitability of the particular consumable for its intended use and the environment of such use;
c. supplying operating logic included in the non-consumable that controls interrogating of the specific consumable with respect to said readable tolerance specifications that are embedded with the specific consumable or its packaging thereby determining whether the specific consumable is operating consistent with the readable tolerance specifications; and
d. activating an interlock signal to inform on non-compliance of the consumable when the operating logic detects operation inconsistent with at least one of the readable tolerance specifications, wherein the interlock activates a stoppage function with respect to the manifold capable of avoiding out-of-compliance operation.

10. The method in accordance with claim 9, wherein the interrogating of the specific consumable is recognized as non-genuine for use in that manifold system when at least one of the readable tolerance specifications is determined, after such interrogating, to be inconsistent with that readable tolerance specification, and/or wherein the operating logic probes whether or not the correct consumable is installed and is within the operational limits and parameters of that specific consumable for said method within which the consumable is to be used or with which it is to be interfaced.

11. The method in accordance with claims 9 or 10, further including providing a multipoint storage feature for the specific consumable, preferably wherein the multipoint storage feature provides redundant points (check sum), multiple points to read from, such as multiple means of reading or multiple different types of reading means, wherein reading of the multipoint tolerance specification indicates correct location of a component within the system and minimizes possible installing of an incorrect consumable for the system or at an incorrect location of the system.

12. The method in accordance with any one of claims 10-11, wherein when the signal activating includes interlocking that activates a stoppage function with respect to the manifold system capable of avoiding out-of-compliance operation.

13. The method in accordance with any one of claims 9-12, having one or more of the following:
further including employing communication for the readable tolerance specification includes barcode, RFID, wireless, memory key, hard wiring, chip, engraving, label and combinations thereof;
wherein the bioprocessing fluid is selected from the group consisting of biopharmaceutical fluids; preparation and media buffers; water used in making buffers; developmental, clinical and commercial drug products, components and formulations; organic solutions and other organic materials, including cells, tissue, byproduct of cell growth; adjuvants; active pharmaceutical ingredients (API'S); antibodies; antibody drug conjugates; vaccines; and combinations thereof;
wherein the consumable has a predetermined function within the method, the method selected from the group consisting of normal flow filtration, tangential flow filtration, chromatography, preparative chromatography, bioreactor applications, media preparation, media dispensing, buffer preparation, buffer dispensing, cell banking, drug or biologic fluid bottling or bagging from bulk containers or other sources, vial filling, blow molding and sealing with drug dispensing, liophilization, biologics flash freeze, cold freeze, cryogenic freeze and combinations thereof.

## Patentansprüche

1. System zur Verarbeitung von Bioverarbeitungsfluiden, in dem:
a. das System einen Verteiler, ein oder mehrere Verbrauchsmaterialien und mindestens ein Nichtverbrauchsmaterial umfasst, wobei jedes Verbrauchsmaterial und Nichtverbrauchsmaterial eine vorbestimmte Funktion aufweist, wobei das System die Verbrauchsmaterialien und die Nichtverbrauchsmaterialien kombiniert, wobei das System zum Reinigen, Filtern oder Sammeln eines Bioverarbeitungsfluiden dient;
b. mindestens eines der Verbrauchsmaterialien ein spezifisches Verbrauchsmaterial ist, das durch lesbare Toleranzspezifikationen gekennzeichnet ist, die in das spezifische Verbrauchsmaterial oder seine Verpackung eingebettet sind und die Eignung des Verbrauchsmaterials für eine Verwendung in dem System definieren, wobei die lesbaren Toleranzspezifikationen mit dem spezifischen Verbrauchsmaterial verknüpft sind, wobei eine der Toleranzspezifikationen ist, dass das Verbrauchsmaterial ein nicht originales Verbrauchsmaterial für dieses Verteilersystem ist, und eine andere der Toleranzspezifikationen ist, dass ein Betriebsdetail, eine Parameterspezifikation oder eine Kombination davon die Eignung des jeweiligen Verbrauchsmaterials für seinen beabsichtigten Gebrauch und die Umgebung eines solchen Gebrauchs definieren,
c. das Nichtverbrauchsmaterial eine Betriebslogik enthält, die eine Abfrage des spezifischen Verbrauchsmaterials in Bezug auf die lesbaren Toleranzspezifikationen steuert, wodurch bestimmt wird, ob das spezifische Verbrauchsmaterial in Übereinstimmung mit den lesbaren Toleranzspezifikationen arbeitet; und
d. eine Verriegelung aktiviert wird, um über die Nichteinhaltung des Verbrauchsmaterials zu informieren, wenn die Betriebslogik einen Betrieb erkennt, der nicht mindestens eine der lesbaren Toleranzspezifikationen einhält, wobei die Verriegelung eine Stoppfunktion in Bezug auf den Verteiler aktiviert, die einen Nichteinhaltungsbetrieb vermeiden kann.

2. System nach Anspruch 1, wobei das spezifische Verbrauchsmaterial als nicht original zur Verwendung in diesem Verteilersystem erkannt wird, wenn mindestens eine der lesbaren Toleranzspezifikationen abgefragt und als inkonsistent mit dieser lesbaren Toleranzspezifikation bestimmt wird.

3. System nach einem der vorhergehenden Ansprüche, wobei die Betriebslogik prüft, ob das richtige Verbrauchsmaterial für das System installiert ist oder nicht und innerhalb der Betriebsgrenzen und -parameter dieses spezifischen Verbrauchsmaterials für das System liegt.

4. System nach einem der vorhergehenden Ansprüche, wobei das Verbrauchsmaterial lesbare Mehrpunkttoleranzspezifikationen enthält, auf die durch das Nichtverbrauchsmaterial zugegriffen werden kann und die von der Betriebslogik des Nichtverbrauchsmaterials bearbeitet werden, wobei vorzugsweise die Mehrpunkttoleranzspezifikation redundante Punkte (Prüfsumme), mehrere Punkte zum Auslesen wie beispielsweise mehrere Lesemittel oder mehrere verschiedene Arten von Lesemitteln bereitstellt, wobei Lesevorgänge der Mehrpunkttoleranzspezifikation die richtige Position einer Komponente innerhalb des Systems anzeigen und die mögliche Installation eines falschen Verbrauchsmaterials für das System oder an einer falschen Position des Systems minimieren.

5. System nach einem der vorhergehenden Ansprüche, wobei mindestens eine der lesbaren Toleranzspezifikationen eine Kommunikation für die Abfrage verwendet, die einen Barcode, RFID, drahtlos, Speicherschlüssel, Festverdrahtung, Chip, Gravur, Etikett und Kombinationen davon umfasst, und/oder wobei die Verriegelung aktiviert wird, um über die Nichteinhaltung des Verbrauchsmaterials zu informieren.

6. System nach einem der vorhergehenden Ansprüche, wobei das zu verarbeitende Bioverarbeitungsfluid ausgewählt ist aus der Gruppe bestehend aus biopharmazeutischen Fluiden; Vorbereitungs- und Medienpuffer; Wasser zur Herstellung von Puffern; Entwicklungs-, klinische und kommerzielle Arzneimittel, Komponenten und Formulierungen; organische Lösungen und andere organische Materialien, einschließlich Zellen, Gewebe, Nebenprodukt von Zellwachstum; Adjuvantien; aktive pharmazeutische Wirkstoffe (APIs); Antikörper; Antikörper-Wirkstoffkonjugate; Impfstoffe; und Kombinationen davon.

7. System nach einem der vorhergehenden Ansprüche, wobei das System ein Fluidmanagementsystem ist, das ausgewählt ist aus der Gruppe bestehend aus Normalflussfiltration, Tangentialflussfiltration, Chromatographie, Pufferherstellung, Medienvorbereitung, Abgabe, Transferanwendungen und Bioreaktoren/Fermentern.

8. System nach einem der vorhergehenden Ansprüche, wobei das Verbrauchsmaterial eine vorbestimmte Funktion innerhalb des Systems aufweist, wobei das System ausgewählt ist aus der Gruppe bestehend aus Normalflussfiltration, Tangentialflussfiltration, Chromatographie, vorbereitender Chromatographie, Bioreaktoranwendungen, Medienvorbereitung, Medienabgabe, Puffervorbereitung, Pufferabgabe, Zellbanking, Abfüllen oder Abpacken von Arzneimitteln oder biologischen Fluiden aus Großbehältern oder anderen Quellen, Befüllen von Fläschchen, Blasformen und Verschließen mit Arzneimittelabgabe, Lyophilisierung, Blitzgefrieren von Biologika, Kaltgefrieren, kryogenes Einfrieren und Kombinationen davon.

9. Verfahren zur Verarbeitung von Bioverarbeitungsfluiden, wobei das Verfahren Folgendes umfasst:
a. Bereitstellen eines Verteilers, von Verbrauchsmaterialien und Nichtverbrauchsmaterialien, die jeweils eine vorbestimmte Funktion aufweisen, wobei die Verbrauchsmaterialien und Nichtverbrauchsmaterialien zu einem System zur Verarbeitung durch Reinigen, Filtern oder Sammeln eines Bioverarbeitungsfluids eines ausgewählten Typs kombiniert werden;
b. beim Bereitstellen mindestens eines der Verbrauchsmaterialien, Auswählen eines spezifischen Verbrauchsmaterials, das durch lesbare Toleranzspezifikationen gekennzeichnet ist, die die Eignung des Verbrauchsmaterials für eine Verwendung in dem System definieren, wobei die lesbaren Toleranzspezifikationen mit dem spezifischen Verbrauchsmaterial verknüpft sind, wobei eine der Toleranzspezifikationen ist, dass das Verbrauchsmaterial ein nicht originales Verbrauchsmaterial für dieses Verteilersystem ist, und eine andere der Toleranzspezifikationen ist, dass ein Betriebsdetail, eine Parameterspezifikation oder eine Kombination davon die Eignung des jeweiligen Verbrauchsmaterials für seinen beabsichtigten Gebrauch und die Umgebung eines solchen Gebrauchs definieren;
c. Bereitstellen einer in dem Nichtverbrauchsmaterial enthaltenen Betriebslogik, die eine Abfrage des spezifischen Verbrauchsmaterials in Bezug auf die lesbaren Toleranzspezifikationen steuert, die in das spezifische Verbrauchsmaterial oder seine Verpackung eingebettet sind, wodurch bestimmt wird, ob das spezifische Verbrauchsmaterial in Übereinstimmung mit den lesbaren Toleranzspezifikationen arbeitet; und
d. Aktivieren eines Verriegelungssignals, um über die Nichteinhaltung des Verbrauchsmaterials zu informieren, wenn die Betriebslogik einen Betrieb erkennt, der nicht mindestens eine der lesbaren Toleranzspezifikationen einhält, wobei die Verriegelung eine Stoppfunktion in Bezug auf den Verteiler aktiviert, der einen Nichteinhaltungsbetrieb vermeiden kann.

10. Verfahren nach Anspruch 9, wobei beim Abfragen das spezifische Verbrauchsmaterial als nicht original zur Verwendung in diesem Verteilersystem erkannt wird, wenn mindestens eine der lesbaren Toleranzspezifikationen nach der Abfrage als inkonsistent mit dieser lesbaren Toleranzspezifikation bestimmt wird, und/oder wobei die Betriebslogik prüft, ob das richtige Verbrauchsmaterial installiert ist oder nicht und innerhalb der Betriebsgrenzen und -parameter dieses spezifischen Verbrauchsmaterials für das Verfahren liegt, innerhalb dessen das Verbrauchsmaterial verwendet werden soll oder mit dem es verbunden werden soll.

11. Verfahren nach Anspruch 9 oder 10, weiterhin umfassend das Bereitstellen eines Speichermittels für das spezifische Verbrauchsmaterial, wobei vorzugsweise das Mehrpunktspeichermittel redundante Punkte (Prüfsumme), mehrere Punkte zum Auslesen wie beispielsweise mehrere Lesemittel oder mehrere verschiedene Arten von Lesemitteln bereitstellt, wobei ein Lesevorgang der Mehrpunkttoleranzspezifikation die richtige Position einer Komponente innerhalb des Systems anzeigt und die mögliche Installation eines falschen Verbrauchsmaterials für das System oder an einer falschen Position des Systems minimiert.

12. Verfahren nach einem der Ansprüche 10 und 11, wobei, wenn das das Aktivieren des Signals eine Verriegelung umfasst, die eine Stoppfunktion in Bezug auf das Verteilersystem aktiviert, das in der Lage ist, einen Nichteinhaltungsbetrieb zu vermeiden.

13. Verfahren nach einem der Ansprüche 9 bis 12, mit einer oder mehreren der folgenden Eigenschaften:
weiterhin umfassend eine Verwendung von Kommunikation für die lesbare Toleranzspezifikation einschließlich Barcode, RFID, drahtlos, Speicherschlüssel, Festverdrahtung, Chip, Gravur, Etikett und Kombinationen davon;
wobei das Bioverarbeitungsfluid ausgewählt ist aus der Gruppe bestehend aus biopharmazeutischen Fluiden; Vorbereitungs- und Medienpuffer; Wasser zur Herstellung von Puffern; Entwicklungs-, klinische und kommerzielle Arzneimittel, Komponenten und Formulierungen; organische Lösungen und andere organische Materialien, einschließlich Zellen, Gewebe, Nebenprodukt von Zellwachstum; Adjuvantien; aktive pharmazeutische Wirkstoffe (APIs); Antikörper; Antikörper-Wirkstoffkonjugate; Impfstoffe; und Kombinationen davon;
wobei das Verbrauchsmaterial eine vorbestimmte Funktion innerhalb des Verfahrens aufweist, wobei das Verfahren ausgewählt ist aus der Gruppe bestehend aus Normalflussfiltration, Tangentialflussfiltration, Chromatographie, vorbereitender Chromatographie, Bioreaktoranwendungen, Medienvorbereitung, Medienabgabe, Puffervorbereitung, Pufferabgabe, Zellbanking, Abfüllen oder Abpacken von Arzneimitteln oder biologischen Fluiden aus Großbehältern oder anderen Quellen, Befüllen von Fläschchen, Blasformen und Verschließen mit Arzneimittelabgabe, Lyophilisierung, Blitzgefrieren von Biologika, Kaltgefrieren, kryogenes Einfrieren und Kombinationen davon.

## Revendications

1. Système de traitement de fluides de biotraitement, dans lequel :
a. le système comporte un collecteur, un ou plusieurs consommables et au moins un non-consommable, chaque consommable et non-consommable ayant une fonction prédéterminée, ledit système combinant les consommables et les non-consommables, le système servant à purifier, filtrer ou recueillir un fluide de biotraitement ;
b. au moins un des consommables est un consommable spécifique **caractérisé par** des spécifications de tolérance lisibles intégrées au consommable spécifique ou à son emballage et qui définissent l'adéquation du consommable à une utilisation dans le système, lesquelles spécifications de tolérance lisibles sont associées au consommable spécifique, l'une des spécifications de tolérance étant que le consommable n'est pas un consommable d'origine pour ce système à collecteur, et une autre des spécifications de tolérance consistant en un détail de fonctionnement, une spécification de paramètre ou une combinaison de ceux-ci définissant l'adéquation du consommable en question à l'utilisation à laquelle il est destiné et à l'environnement d'une telle utilisation ;
c. le non-consommable comporte une logique de fonctionnement qui commande l'inspection du consommable spécifique eu égard auxdites spécifications de tolérance lisibles en déterminant ainsi si le consommable spécifique fonctionne en adéquation avec les spécifications de tolérance lisibles ; et
d. un verrouillage électrique effectue une activation pour informer de l'inadéquation du consommable lorsque la logique de fonctionnement détecte un fonctionnement qui n'est pas en adéquation avec au moins une des spécifications de tolérance lisibles, ledit verrouillage électrique activant une fonction d'arrêt, eu égard au collecteur, en mesure d'éviter un fonctionnement non conforme.

2. Système selon la revendication 1, dans lequel le consommable spécifique est reconnu ne pas être d'origine pour une utilisation dans ce système à collecteur lorsqu'au moins une des spécifications de tolérance lisibles est inspectée et déterminée ne pas être en adéquation avec cette spécification de tolérance lisible.

3. Système selon l'une quelconque des revendications précédentes, dans lequel la logique de fonctionnement évalue si le bon consommable est installé pour ledit système et se trouve dans les limites et paramètres de fonctionnement de ce consommable spécifique pour ledit système.

4. Système selon l'une quelconque des revendications précédentes, dans lequel le consommable comporte des spécifications de tolérance lisibles multipoints qui sont accessibles par le non-consommable et sur lesquelles agit la logique de fonctionnement du non-consommable, de préférence dans lequel la spécification de tolérance multipoint fournit des points redondants (somme de contrôle), des points multiples servant de bases de lecture, tels que de multiples moyens de lecture ou multiples types différents de moyens de lecture, la lecture de la spécification de tolérance multipoint indiquant le bon emplacement d'un composant au sein du système et réduisant la possibilité d'installation d'un mauvais consommable pour le système ou à un mauvais emplacement du système.

5. Système selon l'une quelconque des revendications précédentes, dans lequel au moins une des spécifications de tolérance lisibles met en œuvre une communication dans le cadre de l'inspection, comprenant : code à barres, radio-identification, sans fil, clé mémoire, raccordement fixe, puce, gravure, étiquette et des combinaisons de ceux-ci, et/ou dans lequel le verrouillage électrique effectue une activation pour informer de l'inadéquation du consommable.

6. Système selon l'une quelconque des revendications précédentes, dans lequel le fluide de biotraitement à traiter est choisi dans le groupe constitué par les fluides biopharmaceutiques ; les tampons de préparation et tampons-supports ; l'eau entrant dans la production des tampons ; les produits, composants et formulations médicamenteuses en développement, cliniques et commerciaux ; les solutions organiques et autres matériaux organiques, dont cellules, tissus, dérivés de croissance cellulaire ; les adjuvants ; les principes actifs ; les anticorps ; les conjugués médicamenteux d'anticorps ; les vaccins ; et des combinaisons de ceux-ci.

7. Système selon l'une quelconque des revendications précédentes, dans lequel le système est un système de gestion de fluide choisi dans le groupe constitué par la filtration en flux normal, la filtration en flux tangentiel, la chromatographie, la préparation de tampon, la préparation de supports, la distribution, les applications de transfert et les bioréacteurs/fermenteurs.

8. Système selon l'une quelconque des revendications précédentes, dans lequel ledit consommable a une fonction prédéterminée au sein du système, le système étant choisi dans le groupe constitué par la filtration en flux normal, la filtration en flux tangentiel, la chromatographie, la chromatographie préparative, les applications en bioréacteur, la préparation de supports, la distribution de supports, la préparation de tampon, la distribution de tampon, la constitution de banques de cellules, la mise en bouteilles ou en sachets de fluides médicamenteux ou biologiques à partir de récipients en vrac ou d'autres sources, le remplissage de flacons, le moulage par extrusion-soufflage et scellage avec distribution de médicament, la lyophilisation, la congélation instantanée de substances biologiques, la congélation par le froid, la congélation cryogénique et des combinaisons de ceux-ci.

9. Procédé de traitement de fluides de biotraitement, comprenant :
a. la mise à disposition d'un collecteur, de consommables et non-consommables ayant chacun une fonction prédéterminée, lesdits consommables et non-consommables se combinant en un système de traitement par purification, filtration ou recueil d'un fluide de biotraitement d'un certain type ;
b. ladite mise à disposition d'au moins un des consommables s'effectue par sélection d'un consommable spécifique **caractérisé par** des spécifications de tolérance lisibles qui définissent l'adéquation du consommable à une utilisation dans le système, lesquelles spécifications de tolérance lisibles sont associées au consommable spécifique, l'une des spécifications de tolérance étant que le consommable n'est pas un consommable d'origine pour ce système à collecteur, et une autre des spécifications de tolérance consistant en un détail de fonctionnement, une spécification de paramètre ou une combinaison de ceux-ci définissant l'adéquation du consommable en question à l'utilisation à laquelle il est destiné et à l'environnement d'une telle utilisation ;
c. la fourniture d'une logique de fonctionnement incluse dans le non-consommable qui commande l'inspection du consommable spécifique eu égard auxdites spécifications de tolérance lisibles qui sont intégrées au consommable spécifique ou à son emballage en déterminant ainsi si le consommable spécifique fonctionne en adéquation avec les spécifications de tolérance lisibles ; et
d. l'activation d'un signal de verrouillage électrique pour informer de l'inadéquation du consommable lorsque la logique de fonctionnement détecte un fonctionnement qui n'est pas en adéquation avec au moins une des spécifications de tolérance lisibles, ledit verrouillage électrique activant une fonction d'arrêt eu égard au collecteur en mesure d'éviter un fonctionnement non conforme.

10. Procédé selon la revendication 9, dans lequel l'inspection reconnait que le consommable spécifique n'est pas d'origine pour une utilisation dans ce système à collecteur lorsqu'il est déterminé, après ladite inspection, qu'au moins une des spécifications de tolérance lisibles n'est pas en adéquation avec cette spécification de tolérance lisible, et/ou dans lequel la logique de fonctionnement évalue si le bon consommable est installé et se trouve dans les limites et paramètres de fonctionnement de ce consommable spécifique pour ledit procédé dans le cadre duquel le consommable doit être mis en œuvre ou avec lequel il doit interagir.

11. Procédé selon la revendication 9 ou 10, comportant en outre la fourniture d'un moyen de stockage multipoint pour le consommable spécifique, de préférence dans lequel le moyen de stockage multipoint fournit des points redondants (somme de contrôle), des points multiples servant de bases de lecture, tels que de multiples moyens de lecture ou multiples types différents de moyens de lecture, ladite lecture de la spécification de tolérance multipoint indiquant le bon emplacement d'un composant au sein du système et réduisant la possibilité d'installation d'un mauvais consommable pour le système ou à un mauvais emplacement du système.

12. Procédé selon l'une quelconque des revendications 10 et 11, dans lequel l'activation du signal comporte un verrouillage qui active une fonction d'arrêt, eu égard au système à collecteur, en mesure d'éviter un fonctionnement non conforme.

13. Procédé selon l'une quelconque des revendications 9 à 12, dans lequel un ou plusieurs des aspects suivants sont valables :
il comporte en outre l'emploi d'une communication pour la spécification de tolérance lisible, dont: code à barres, radio-identification, sans fil, clé mémoire, raccordement fixe, puce, gravure, étiquette et des combinaisons de ceux-ci ;
le fluide de biotraitement est choisi dans le groupe constitué par les fluides biopharmaceutiques ; les tampons de préparation et tampons-supports ; l'eau entrant dans la production des tampons ; les produits, composants et formulations médicamenteuses en développement, cliniques et commerciaux ; les solutions organiques et autres matériaux organiques, dont cellules, tissus, dérivés de croissance cellulaire ; les adjuvants ; les principes actifs ; les anticorps ; les conjugués médicamenteux d'anticorps ; les vaccins ; et des combinaisons de ceux-ci ;
le consommable a une fonction prédéterminée au sein du procédé, ledit procédé étant choisi dans le groupe constitué par la filtration en flux normal, la filtration en flux tangentiel, la chromatographie, la chromatographie préparative, les applications en bioréacteur, la préparation de supports, la distribution de supports, la préparation de tampon, la distribution de tampon, la constitution de banques de cellules, la mise en bouteilles ou en sachets de fluides médicamenteux ou biologiques à partir de récipients en vrac ou d'autres sources, le remplissage de flacons, le moulage par extrusion-soufflage et scellage avec distribution de médicament, la lyophilisation, la congélation instantanée de substances biologiques, la congélation par le froid, la congélation cryogénique et des combinaisons de ceux-ci.
